# EUROPEAN PATENT SPECIFICATION

(11) **EP 2 347 904 B1**
(45) Date of publication and mention of the grant of the patent: **03.04.2013**
(21) Application number: 11163318.6
(22) Date of filing: 18.11.2005
(51) Int. Cl.: B41M 7/00, B41M 5/00, B41J 2/155, B41J 11/00, C09D 11/00

(54) **Ink set and ink-jet recording method utilizing uv-curable ink**
Tintensatz und Tintenstrahlaufzeichnungsverfahren mit UV- lichthärtbaren Tinte
Ensemble d'encres et procédé d'enregistrement à jet d'encre utilisant de l'encre uv-durcissable

(30) Priority: 09.12.2004 JP 2004356538; 18.02.2005 JP 2005041878
(43) Date of publication of application: 27.07.2011
(62) Divisional of application: 05807081.4
(73) Proprietor: Konica Minolta Medical & Graphic, Inc., Tokyo 191-8511 (JP)
(72) Inventor: Ishikawa, Wataru, Tokyo 192-8505 (JP); Nakajima, Atsushi, Tokyo 192-8505 (JP)
(74) Representative: Gille Hrabal

(56) References cited:
- WO-A1-2004/056581
- JP-A- 2004 285 216
- US-A1- 2003 222 961

## Description

### FIELD OF THE INVENTION

The present invention relates to (A) an image forming method, which utilizes photocurable ink and is capable of high speed printing, and (B) an ink-jet recording method which utilizes color photo-curable ink, and is capable of high speed printing and improved image adhesion to the substrate, depression of curing wrinkles and surface texture.

### BACKGROUND OF THE INVENTION

(A) Heretofore, a curable ink composition, which is cured by actinic rays such as ultraviolet rays and electron rays, or by heat, has been utilized in practice for various applications such as paints, adhesives and printing inks onto such as plastic, paper, wood and inorganic materials, as well as printed circuit board and electric insulation related matters. In recent years, as for printing inks, paints and adhesives among them, further improvement of weather-proofing and adhesion capability has been desired. Further, as ink-jet ink utilizing them, photo-curable ink, which is cured by actinic rays such as ultraviolet rays, is known. An ink-jet method utilizing this ultraviolet curable ink has attracted attention in recent years with respect to relatively low odor, rapid drying and the capability of recording on a recording material without an ink absorptive property, and ultraviolet curable ink-jet ink has been disclosed in such as JP-A 6-200204 (hereinafter, JP-A refers to Unexamined Japanese Patent Application Publication No.) and Japanese Translation of PCT International Patent Application Publication No. 2000-504778.
   With respect to these photo-curable inks, an ink employing a radical polymerizing compound, and further an ink employing a cationic polymerizing compound which does not exhibit a polymerization inhibition effect due to oxygen, have been studied (for example, please refer to Patent Documents 1 - 4).
   However, in the case of forming an image by use of ultraviolet curable ink-jet ink, insufficient curing tends to be caused when a large an ink quantity is to be cured during one time ultraviolet irradiation. This is because of deterioration of the interior curing capability due to the increased ink layer thickness. However, it is necessary to increase the ink quantity per one time ejection to improve productivity, however, insufficient curing tends to result due to a heavier ink layer thickness. Further, this problem is more significantly exhibited in the case of a line printer.
(B) An ultraviolet curable ink-jet recording method can perform image formation on various substrates as described before and is increasingly attracting attention. In the ink-jet recording method, there are a serial recording method, which forms an image by dividing the image and overlaying the thinned-out images, and a line recording method, which forms an image with a single pass, and both methods are also realized in an ultraviolet curable ink-jet recording method.

In the case of forming a color image by the ultraviolet curable ink-jet recording method, there are an exposure method to irradiate ultraviolet rays for each color to be consecutively cured and an exposure method to irradiate ultraviolet rays onto plural colors at once, in both the serial recording method and the line recording method. Since in an apparatus to irradiate ultraviolet rays onto each color requires plural light sources, a rise in apparatus size and overall cost up result.

The ultraviolet curable ink-jet recording method is suitable for high speed printing because ink is dried instantly by irradiation of ultraviolet rays. However, the uncured ink quantity after irradiation of ultraviolet rays necessarily increases when a higher printing speed is employed. In a serial print method, it is the case that recording is performed with a reduced number of passes.

In Patent Documents 5 and 6, since bleeding among multi-colors tends to be caused when the ink volume is large, proposed is a method in which the ink adhesion quantity of the finally formed image is limited by utilizing inks of seven colors comprising Y, M, C, K, R, G, and B, which includes secondary colors. This is a technology proposed to prevent color mixture of ink, since the ink absorption rate by a substrate decreases with increased deposited ink quantity. In Patent Documents 5 and 6, there is no description concerning ultraviolet curable ink.

In an ultraviolet curable ink-jet recording method, since ink is cured on the substrate surface without being allowed to be absorbed by the substrate, no problems are caused as hitherto with respect to ink absorption. However, when ultraviolet rays are irradiated onto drops of large ink volume, ultraviolet rays, which contributes to a chemical reaction, do not penetrate to the interior, resulting in deteriorated interior curing and poor adhesion of the ink to the substrate, which is a characteristic problem of ultraviolet curable ink. Further, depending on ink composition and adhered ink volume, only the surface is cured to cause stress between the interior and the surface resulting in generation of curing wrinkles. These phenomena are significant with black ink which has a high light blocking effect against ultraviolet rays. Further, these phenomena also vary greatly depending on the added amount of a polymerization initiator which contributes to curing sensitivity, and absorption of ultraviolet rays is increased when the amount of a polymerization initiator is increased to increase curing sensitivity, which often deteriorates the interior curing capability.

Surface texture will be increased when ink deposition volume is increased due to mixing of colors, and not only surface texture but also visual sensation of quality such as glossiness differs between the highlighted areas and the shadowy areas.

These phenomena tend to be caused with ink having a high light blocking effect against ultraviolet rays depending on such factors as types and density of the colorant utilized in the ink, and ink having a high additive rate of a polymerization initiator, however, these phenomena also vary depending on the type of reaction. Specifically, in cationic polymerizable ink, which exhibits no polymerization inhibition to oxygen and exhibits a high surface curing capability, the above-described phenomena are significant factors which require improvement.

JP 2004/285216 discloses an active light-hardening ink set for forming a color image, whereby the ink set comprises at least water, dyes and photopolymerizable monomers.

US 2003/0222961 A1 discloses an energy radiation curable ink having a property to be cured when Irradiated with energy radiation such as UV radiation, infrared radiation or the like, and an image recording method and an image recording method and an image recording apparatus for using the energy radiation curable ink and forming an image according to an ink-jet system.

WO 2004/056581 A1 discloses a method of curing a radiation-curable fluid, whereby the method includes emitting radiation from a radiation source towards the fluid to be cured, wherein at least 90 % of the radiation has a wavelength in a band having a width of less than 50 nm; and providing an inserting environment In the region of the radiation source.
[Patent Document 1] JP-A (hereinafter, JP-A refers to Unexamined Japanese Patent Application Publication No.) 2001-220526 (claims, examples)
[Patent Document 2] JF-A 2002-188025 (claims, examples)
[Patent Document 3] JP-A 2002-317139 (claims, examples)
[Patent Document 4] JP-A 2003-55449 (claims, examples)
[Patent Document 5] JP-A 10-44473
[Patent Document 6] JP-A 8-244254

### SUMMARY OF THE INVENTION

### PROBLEMS TO BE SOLVED

This invention has been achieved in view of the above-described problems, and the objects are to provide: (A) an image forming method which exhibits no deterioration of curing capability nor deterioration of curing capability even when printing at a high rate as with a line printer, and to provide (B) an ink-jet recording method, and an ink set which are capable of high rate printing, exhibit no deterioration of curing capability, and exhibit improved adhesion to the substrate, as well as suppression of curing wrinkles and roughened image texture.

### MEANS TO SOLVE THE PROBLEMS

Item (1) An ink-jet recording method in which plural colors of ink are applied onto a substrate and said ink is fixed by irradiation of ultraviolet rays, wherein any uncured ink volume on the substrate at the time of irradiation of ultraviolet rays is limited to make an ultraviolet transmittance at the absorption peak wavelength at least 0.1%.

Item (2) An ink-jet recording method in which plural colors of ink are applied onto a substrate and said ink is fixed by ultraviolet irradiation, wherein the total applied ink of each color in a final image is limited to at most the total applied ink in a solid image of each color.

3 Item (3) The ink-jet recording method described in Item (17) or (18), wherein ink of the seven colors of yellow, magenta, cyan, black, blue, green and red are utilized as the aforesaid plural color inks.

Item (4) An ink set which is comprised of ink of plural colors utilized in an ink-jet recording method described in any one of Items (1) - (3), wherein ultraviolet transmittance of a solid image (ink), with respect to each ink of all the plural colors, is at least 0.1%.

Item (5) The ink set described in above Item (4), wherein ink of the seven colors of yellow, magenta, cyan, black, blue, green and red are utilized as the aforesaid plural color inks.

### EFFECTS OF THE INVENTION

Further, inventions according to Items (1) - (5) can provide an ink-jet recording method, and an ink which utilize ultraviolet-curable color ink, capable of a high rate printing, and exhibit improved adhesion to the substrate, as well as in suppression of curing wrinkles and rough image texture.

### BRIEF DESCRIPTION OF THE DRAWINGS

Fig. 1 is a front view showing an example of one constitution of the primary portion of the ink-jet recording device of this invention.

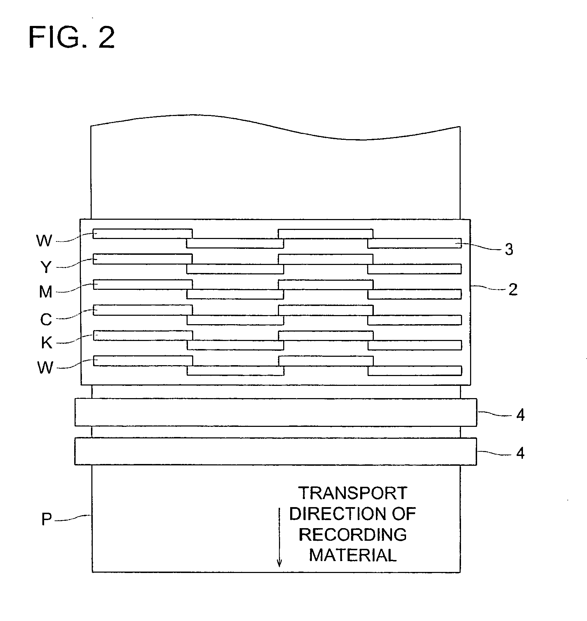

Fig. 2 is an over view showing another example of a constitution of the primary portion of an ink-jet recording device of this invention.
Fig. 3 shows a constitution of the primary portion of another ink-jet recording device of this invention.
Fig. 4 shows a constitution of the primary portion of still another ink-jet recording device of this invention.
Fig. 5 shows a constitution of the primary portion of yet another ink-jet recording device of this invention.

### DESCRIPTION OF THE ALPHA-NUMERIC DESIGNATIONS

1: Recording device
2: Head carriage
3: Recording head
31: Ink ejection outlet
4: Irradiation means
5: Platen portion
6: Guide member
7: Bellows
P: Recording material (Substrate)

### DETAILED DESCRIPTION OF THE INVENTION

The inventors of this invention have achieved this invention as a result of extensive study in regard to the above-described problems. In the following, the invention described in above Items (1) - (5) will be further explained.

As a result of extensive study, it has been found that in an ink-jet recording method in which after plural colors of ink are applied on a substrate, said ink is fixed by irradiation of ultraviolet rays, achieved can be an ink-jet recording method capable of high speed recording and having been improved in adhesiveness on a substrate as well as in depressed curing wrinkles and roughness feeling, by limiting uncured ink quantity on a substrate at the time of ultraviolet irradiation within quantity so as to make ultraviolet transmittance at the absorption peak wavelength of a polymerization initiator of not less than 0.1%.

Further, it has been found that in an ink-jet recording method in which plural colors of ink are applied on a substrate and said ink is fixed by ultraviolet ray irradiation, achieved can be an ink-jet recording method capable of high speed recording and having been improved in adhesiveness on a substrate as well as in depressed curing wrinkles and roughness feeling, by limiting the total application quantity of each color ink in a final image to not more than ink quantity to give a solid image of one color. Ink quantity to give a solid image of one color is ink quantity to give the maximum density of one color.

5 In the following, the invention described in Items (1) - (25) will be detailed.

### [Ink-jet Recording Method]

The invention described in above Items (1) - (5) is characterized by that ink application quantity at the time of ultraviolet irradiation is set to quantity to make the ultraviolet transmittance at the absorption peak wavelength of a polymerization initiator of not less than 1% and more preferably the total application quantity of each color ink in a final image is set to not more than quantity to give a solid image of one color.

Ultraviolet transmittance is measured at the absorption peak wavelength which contributes to a polymerization reaction. Specifically, an image is formed on a substrate having a high ultraviolet transmittance such as polypropylene and ultraviolet transmittance at the absorption peak wavelength of a polymerization initiator is measured by use of a spectrophotometer having an aperture of 10 mmφ. Ultraviolet transmittance referred in this invention is not an ultraviolet transmittance of only a portion on a substrate where ink is applied but a mean ultraviolet transmittance of an image portion having a size of 10 mmφ containing a portion without ink application.

In a serial recording method, ink is applied on a substrate by dividing an image in plural times and is cured. Therefore, when the division number is increased, that is, ink application quantity per one scan is decreased by increasing the pass number, and ink is cued by each one scan, ultraviolet transmittance of ink can be increased in one time of curing. However, in the case of not curing per one scan but collected irradiation of ultraviolet rays after image completion or recording at a high speed with a reduced pass number, it may not be always said sufficient. In a line recording, the condition is most difficult because uncured ink quantity becomes larger than that of a serial recording method.

The invention described in Items (1) - (5) is a recording method which limits ink application quantity at the time of ultraviolet irradiation to not less than 0.1% based on an ultraviolet transmittance. To realize this, preferable is a method to interlace an image or to limit ink quantity (application quantity) by increasing a content rate of a colorant, and specifically preferable is a method to utilize ink of seven colors comprising yellow, magenta, cyan, black, blue, green and red.

### (Method to Utilize Inks of Seven Colors)

To make ink application quantity of the above-described range, it is preferable to utilize ink of seven colors comprising secondary colors of blue, green and red in addition to yellow, magenta, cyan and black.

Generally, in an ink-jet recording method to form a color image, ink of 3 colors comprising yellow ink (hereinafter, also referred to as Y), magenta ink (hereinafter, also referred to as M) and cyan ink (hereinafter, also referred to as C); or ink of 4 colors comprising black ink (hereinafter, also referred to as K) in addition thereto, are utilized.

In such an ink-jet recording method, in the case of ink ejection quantity to constitute one pixel being not variable, colors reproduced by one pixel are seven colors of Y, M, C, and red (hereinafter, also referred to as R) which is accumulation of Y and M, blue (hereinafter, also referred to as B) which is accumulation of M and C, green (hereinafter, also referred to as G) which is accumulation of C and Y, and black which is K or accumulation of Y, M and C; and a color (a color of such as paper, generally white) of a substrate (a recording material).

An ink-jet recording device forms a pixel by ejecting ink on a recording material, and in ultraviolet curable ink when ultraviolet rays are irradiated, since such as pixels of 3 colors of R, G and B, which are constituted of accumulation of ink of at least two colors, have more ink quantity per one pixel compared to pixels of Y, M and C, ultraviolet rays which contributes a reaction do not reach the interior to deteriorate the interior curing capability resulting in poor adhesion to the substrate or to cure only the surface to cause stress between the interior and the surface resulting in generation of curing wrinkles.

To solve the above-described problems, in an ink-jet recording method according to the invention described in Items (1) - (5), inks of 7 colors comprising Y, M, C, K, R, G and B are utilized and ink (after conversion) to be utilized for the pixel is determined from image data having been subjected to color separation (before conversion).

There are many conversion methods and a specific example will be shown below, however, this invention is not limited thereto.

For example, based on image data (before conversion) having been subjected to color separation into 3 colors comprising Y, M and C, according to a conversion table of Table 1, a pixel in which Y and M are accumulated is replaced by R, a pixel in which M and C are accumulated is replaced by B, a pixel in which C and Y are accumulated is replaced by G, and a pixel in which Y, M and C are accumulated is replaced by K.

**Table 1**

| Color | Before conversion | | | After conversion | | | | | | | Total output |
|---|---|---|---|---|---|---|---|---|---|---|---|
| | Y | M | C | Y | M | C | K | R | G | B | |
| 1 | 0 | 0 | 0 | 0 | 0 | 0 | 0 | 0 | 0 | 0 | 0 |
| 2 | 0 | 0 | 1 | 0 | 0 | 1 | 0 | 0 | 0 | 0 | 1 |
| 3 | 0 | 1 | 0 | 0 | 1 | 0 | 0 | 0 | 0 | 0 | 1 |
| 4 | 0 | 1 | 1 | 0 | 0 | 0 | 0 | 0 | 0 | 1 | 1 |
| 5 | 1 | 0 | 0 | 1 | 0 | 0 | 0 | 0 | 0 | 0 | 1 |
| 6 | 1 | 0 | 1 | 0 | 0 | 0 | 0 | 0 | 1 | 0 | 1 |
| 7 | 1 | 1 | 0 | 0 | 0 | 0 | 0 | 1 | 0 | 0 | 1 |
| 8 | 1 | 1 | 1 | 0 | 0 | 0 | 1 | 0 | 0 | 0 | 1 |

| | | | | | | | | | | | |
|---|---|---|---|---|---|---|---|---|---|---|---|
| 0: no record, 1: record | | | | | | | | | | | |

Further, Table 2 is a conversion table to determine ink (after conversion) to be utilized in the pixel from image data (before conversion) having been subjected to a color separation into 4 colors of Y, M, C and K. An image color is converted into only K ink, irrespective to color data of Y, M and C, in the case of color data of K being "1" (record).

**Table 2**

| Color | Before conversion | | | | After conversion | | | | | | | Total output |
|---|---|---|---|---|---|---|---|---|---|---|---|---|
| | Y | M | C | K | Y | M | C | K | R | G | B | |
| 1 | 0 | 0 | 0 | 0 | 0 | 0 | 0 | 0 | 0 | 0 | 0 | 0 |
| 2 | 0 | 0 | 1 | 0 | 0 | 0 | 1 | 0 | 0 | 0 | 0 | 1 |
| 3 | 0 | 1 | 0 | 0 | 0 | 1 | 0 | 0 | 0 | 0 | 0 | 1 |
| 4 | 0 | 1 | 1 | 0 | 0 | 0 | 0 | 0 | 0 | 0 | 1 | 1 |
| 5 | 1 | 0 | 0 | 0 | 1 | 0 | 0 | 0 | 0 | 0 | 0 | 1 |
| 6 | 1 | 0 | 1 | 0 | 0 | 0 | 0 | 0 | 0 | 1 | 0 | 1 |
| 7 | 1 | 1 | 0 | 0 | 0 | 0 | 0 | 0 | 1 | 0 | 0 | 1 |
| 8 | 1 | 1 | 1 | 0 | 0 | 0 | 0 | 1 | 0 | 0 | 0 | 1 |
| 9 | 0 | 0 | 0 | 1 | 0 | 0 | 0 | 1 | 0 | 0 | 0 | 1 |
| 10 | 0 | 0 | 1 | 1 | 0 | 0 | 0 | 1 | 0 | 0 | 0 | 1 |
| 11 | 0 | 1 | 0 | 1 | 0 | 0 | 0 | 1 | 0 | 0 | 0 | 1 |
| 12 | 0 | 1 | 1 | 1 | 0 | 0 | 0 | 1 | 0 | 0 | 0 | 1 |
| 13 | 1 | 0 | 0 | 1 | 0 | 0 | 0 | 1 | 0 | 0 | 0 | 1 |
| 14 | 1 | 0 | 1 | 1 | 0 | 0 | 0 | 1 | 0 | 0 | 0 | 1 |
| 15 | 1 | 1 | 0 | 1 | 0 | 0 | 0 | 1 | 0 | 0 | 0 | 1 |
| 16 | 1 | 1 | 1 | 1 | 0 | 0 | 0 | 1 | 0 | 0 | 0 | 1 |

| | | | | | | | | | | | | |
|---|---|---|---|---|---|---|---|---|---|---|---|---|
| 0: no record, 1: record | | | | | | | | | | | | |

Based on data (before conversion) having been subjected to a color separation into 3 colors of R, G and B, for example, according to the conversion table of Table 3, a pixel in which R and B are accumulated is replaced by M, a pixel in which B and G are accumulated is replaced by C, a pixel in which R and G are accumulated is replaced by Y, a pixel in which all of R, G and B are no record is replaced by K, and a pixel in which R, G and B are accumulated is set to no record.

**Table 3**

| Color | Before conversion | | | After conversion | | | | | | | Total output |
|---|---|---|---|---|---|---|---|---|---|---|---|
| | R | G | B | Y | M | C | K | R | G | B | |
| 1 | 0 | 0 | 0 | 0 | 0 | 0 | 1 | 0 | 0 | 0 | 1 |
| 2 | 0 | 0 | 1 | 0 | 0 | 0 | 0 | 0 | 0 | 1 | 1 |
| 3 | 0 | 1 | 0 | 0 | 0 | 0 | 0 | 0 | 1 | 0 | 1 |
| 4 | 0 | 1 | 1 | 0 | 0 | 1 | 0 | 0 | 0 | 0 | 1 |
| 5 | 1 | 0 | 0 | 1 | 0 | 0 | 0 | 1 | 0 | 0 | 2 |
| 6 | 1 | 0 | 1 | 0 | 1 | 0 | 0 | 0 | 0 | 0 | 1 |
| 7 | 1 | 1 | 0 | 1 | 0 | 0 | 0 | 0 | 0 | 0 | 1 |
| 8 | 1 | 1 | 1 | 0 | 0 | 0 | 0 | 0 | 0 | 0 | 0 |

| | | | | | | | | | | | |
|---|---|---|---|---|---|---|---|---|---|---|---|
| 0: no record, 1: record | | | | | | | | | | | |

In addition to these, a method to determine ink (after conversion) utilized for the pixel from image data (before conversion) having been subjected to a color separation may be referred to JP-A 8-244254.

In the above embodiment, image data (before conversion) of 3 colors or 4 colors having been subjected to color separation are converted into data corresponding to inks of 7 colors by a control means of an ink-jet recording device.

Different from conventional inks of Y, M and C which are adjusted to reproduce hues of R, G and B by mixture of inks of Y, M and C, since ink exclusive to Y, M, C, R, G, B and K according to this invention does not require a consideration on utilization as a color mixture, ink can be prepared so that each color has an ideal hue.

In an ink-jet recording method of this invention according to Items (1) - (5), ink is ejected on a substrate to draw an image and successively the ink is cured by irradiation of ultraviolet rays.

In this invention, ink is preferably heated together with an ink-jet nozzle at the time of ejection to reduce viscosity of the ink liquid. The heating temperature is 30 - 80 °C, and preferably 35 - 60 °C.

In the invention described in Items (1) - (5), the total ink thickness after ink has deposited to be cured by irradiation of ultraviolet rays is preferably 2 - 20 µm. In a soft package printing field in which a substrate is often thin plastic material, since there is a problem of stiffness and/or sensation of quality of the whole printed matter in addition to curl and/or wrinkles of a substrate in the case of a large ink layer thickness, it is a specifically preferable application of this invention. Further, liquid drop quantity ejected from each nozzle is preferably 1 - 15 pl.

Further, to form an image having a high precision, it is the better when the irradiation timing is the earlier; however, it is preferable to start light irradiation at a timing when a viscosity of ink becomes preferable.

In more detail, as an irradiation condition of actinic rays, it is preferable to start irradiation of ultraviolet rays within 0.001 - 2.0 seconds after ink deposition, and more preferably within 0.001 - 0.4 seconds. Further, it is preferable to finish the irradiation after ultraviolet irradiation has been performed for 0.1 - 3 seconds, and more preferably for 0.2 - 1 second until fluidity of ink is lost. By adopting the above condition, enlargement of a dot diameter and bleeding among dots can be prevented.

As an irradiation method of ultraviolet rays, the basic method is disclosed in JP-A 60-132767. According to this, light sources are arranged on the both sides of a recording head and the recording head and the light sources are scanned by a shuttle mode. Irradiation is performed leaving a predetermined time after ink deposition. Further, in USP 6,145,979 in which curing is completed by another light source without drive, as an irradiation method, disclosed are a method to utilize an optical fiber, and a method in which a collimated light source is incident on a mirror arranged on the side plane of a recording unit and UV light is irradiated on the recorded portion. In an ink-jet recording method of this invention, any of these irradiation methods can be utilized.

Further, it is also a preferable embodiment in which ultraviolet irradiation is divided into two steps and ultraviolet rays are firstly irradiated by the aforesaid method within 0.001 - 2.0 seconds after ink deposition, and ultraviolet rays are further irradiated after finishing the total printing. By dividing ultraviolet irradiation into two steps, it is possible to further depress shrinkage of a substrate caused at the time of ink curing.

As an examples of a light source utilized in ultraviolet irradiation, such as a mercury lamp, a metal halide lamp, an excimer laser, an ultraviolet laser, a cold cathode tube, a k-light, a LED (light emitting diode) can be applicable, and among them, preferable are a metal halide lamp, a cold cathode tube, a mercury lamp or a K-light because of low energy and/or low cost. With respect to a wavelength, a light source having a peak emission wavelength of 250 - 370 nm and preferably of 270 - 320 nm is preferable with respect to sensitivity. Illuminance is 1 - 3,000 mW/cm² and preferably 1 - 200 mW/cm².

### [Ink]

An ink set utilized in an ink-jet recording method according to the invention described in Items (1) - (5) is provided with an ultraviolet transmittance of a solid image of not less than 0.1% for all ink of plural colors. By this method, a polymerization initiator can obtain ultraviolet rays necessary for polymerization even under a difficult condition in which a plural number of ink are applied on the same pixel.

Further, an ink set of this invention preferably utilizes inks of 7 colors comprising Y, M, C, K, R, G and B as described before to make ink application quantity of the above described range.

In this invention, that is, in the invention described in Items (1) - (5), actinic ray (or light) curable ink is utilized.

Photo-curable ink utilized in this invention is prepared by employing a photo-polymerizing composition comprising a photo-polymerizable compound and a photo-polymerization initiator, and a colorant as basic conponents and by further appropriately incorporating an additive such as a dispersant, a surfactant, an image stabilizer, a polymerization inhibitor, a resin and a solvent.

Among photo-curable inks, a photo-polymerizing composition comprising a radical polymerizing compound and a radical polymerization initiator in radical polymerizing ink are utilized and a photo-polymerizing composition comprising a cationic polymerizing compound and an acid generator as a polymerization initiator in cationic polymerizable ink are utilized.

Radical polymerizing ink includes ink compositions described in such as JP-A 7-159983, Examined Japanese Patent Application Publication No. (hereinafter, referred to as JP-B) 7-31399, JP-A Nos. 8-224982 and 10-863.

Among photo-curable ink, first, a radical polymerizing compound utilized in radical polymerizing ink will be explained. A radical polymerizing compound utilized in radical polymerizing ink according to this invention is a compound having an ethylenic unsaturated bond which is capable of radical polymerization, and may be any of compounds provided having at least one ethylenic unsaturated bond being capable of radical polymerization in a molecule including a chemical form of such as monomer, oligomer and polymer. One type of a radical polymerizing compound may be utilized or a combination of at least two types at any ratio may be utilized to improve aimed characteristics.

A compound having an ethylenic unsaturated bond capable of radical polymerization includes radical polymerizing compounds such as unsaturated carboxylic acid such as acrylic acid, methacrylic acid, itaconic acid, crotonic acid, isocrotonic acid and maleic acid and salt thereof; ester, urethane, amide and anhydride thereof, acrylonitrile, styrene, various types of unsaturated polyester, unsaturated polyether, unsaturated polyamide and unsaturated urethane. Specifically, listed are acrylic derivatives such as 2-ehtylhexylacrylate, 2-hydroxyethylacrylate, butoxyethylacrylate, carbitolacrylate, cyclohexylacrylate, tetrahydrofurfurylacrylate, benzylacrylate, bis(4-acryloxypolyethoxyphenyl)propane, neopentylglycolacrylate, 1,6-hexanedioldiacrylate, ethyleneglycoldiacrylate, diethyleneglycoldiacrylate, triethyleneglycoldiacrylate, tetraethyleneglycoldiacrylate, polyethyleneglycoldiacrylate, polypropyleneglycoldiacrylate, pentaerythritoltriacrylate, pentaerythritoltetraacrylate, dipentaerythritoltetraacryalte, trimethylolpropanetriacrylate, tetramethylolmethanetetraacrylate, oligoesteracrylate, N-methylolacrylamide, diacetonacylamide and epoxyacrylate; methacrylic derivatives such as methylmethacrylate, n-butylmethacrylate, 2-ethylhexylmethacrylate, laurylmethacrylate, allylmethacrylate, glycidyl metacrylate, benzylmethacrylate, dimethylaminomethacrylate, 1,6-hexanediol dimethacrylate, ethyleneglycol dimethacrylate, triethyleneglycol dimethacrylate, polyethyleneglycol dimethacrylate, polypropyleneglycol dimethacrylate, trimethylolethane trimethacrylate, trimethylolpropane trimethacrylate and 2,2-bis(4-methacryloxypolyethoxyphenyl)propane; in addition to derivatives of an allyl compound such as allylglycidyl ether, diallylphthalate and triallyltrimellitate; and further specifically, utilized can be radical polymerizing or cross-linking monomer, oligomer and polymer, which are available on the market or well known in the art, such as described in "Handbook of Cross-linking Agents" edited by Shinzo Yamashita (1981, Taiseisha); "Handbook of UV·EB Curing (Raw Materials)" edited by Seishi Kato (1985, Polymer Publishing Association); "Applicaion and Market of UV·EB Curing Technology" edited by RadoTech Society, p. 79 (1989, CMC); and "Handbook of Polyester Resin" by Eiichi Takiyama (1998, Nikkan Kogyo News Paper Co.). The added amount of the above-described radical polymerizing compounds is preferably 1 - 97 weight% and more preferably 30 - 95 weight%.

As a radical polymerization initiator which constitutes a photo-polymerizing composition together with the above-described radial polymerizing compound, listed are triazine derivatives described in such as JP-B Nos. 59-1281 and 61-9621 and JP-A 60-60104; organic peroxides described in such as JP-A Nos. 59-1504 and 61-243807; diazonium compounds described in such as JP-B Nos. 43-23684, 44-6413, 47-1604 and USP 3,567,453; organic azide compound described in USP Nos. 2,848,328, 2,852,379 and 2,940,853; orthoquinone diazides described in such as JP-B Nos. 36-22062, 37-13109, 38-18015 and 45-9610; various types of onium compounds described in such as JP-B 55-39162 and JP-A 59-14023 and "Macromolecules" vol. 10, p. 1307 (1977); azo compounds described in JP-A 59-142205; metal allene complexes described in JP-A 1-54440, European Patent Nos. 109,851 and 126,712, and J. Imag. Sci. vol. 30, p. 174 (1986); (oxo)sulfonium organo-boron complexes described in JP-A Nos. 4-213861 and 4-255347; titanocenes described in JP-A 61-151197; transition metal complexes containing a transition metal such as ruthenium described in JP-A 61-151197, "Corodination Chemistry Review" vol. 84, PP. 85 - 277 (1988) and JP-A 2-182701; 2,4,5-tiarylimidazole dimmer described in JP-A 3-209477; organic halogen compounds such as carbon tetrabromide and those described in JP-A 59-107344. These polymerization initiators are preferably incorporated in radical polymerizing ink in a range of not more than 5 weight% and preferably of 0.1 - 5 weight%.

Next, cationic polymerizable ink will be explained. Generally, as ultraviolet curable ink, a cationic polymerizing type has been noted because it has advantages of such as no polymerization inhibition by oxygen, little odor of a cationic polymerizing compound such as oxetane and epoxy among utilized cationic polymerizing compounds, and small curing shrinkage. Further, a cationic polymerizing type is characterized by high sensitivity even with a small liquid drop due to no deactivation of an active species by air, and is favorable for an application requiring high precision and high productivity. In this invention, ink of a cationic polymerizing type is preferably utilized.

As cationic polymerizable ink, various types of ink compositions well known in the art can be utilized. For example, listed are JP-A Nos. 6-9714, 2001-31892, 2001-40068, 2001-55507, 2001-310938, 2001-310937, 2001-220526 and 2004-131588.

A cationic polymerizing compound utilized in a photo-cationic polymerizable ink preferable in this invention will now be described.

A cationic polymerizing compound includes the following compound having an oxetane ring.

### (Oxetane Compound Having 2-Position Substituted Oxetan Ring)

In photo-curable ink used in this invention, an oxetane compound, which is provided with at least one 2-position substituted oxetane ring in a molecule, is preferably utilized.

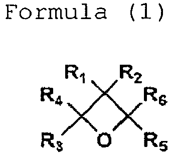

In above-described Formula (1), R₁ - R₆ are each a hydrogen atom or a substituent. However, at least one of the groups represented by R₁ - R₆ is a substituent. Substituents represented by R₁ - R₆ in above-described Formula (1) include such as a fluorine atom, an alkyl group having a carbon number of 1 - 6 (such as a methyl group, an ethyl group, a propyl group and a butyl group), an fluoroalkyl group having a carbon number of 1 - 6, an allyl group, an aryl group (such as a phenyl group and a naphthyl group), a furyl group or a thienyl group. And these groups may be further provided with a substituent.

### (Oxetane Compound Having One Oxetane Ring in Molecule)

Further, among above-described Formula (1), compounds provided with an oxetane ring such as represented by following Formulas (2) - (5) are preferably utilized.

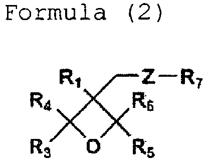

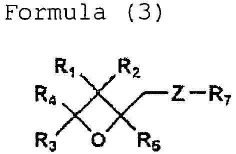

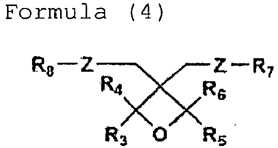

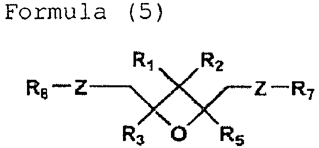

In the formula, R₁ - R₆ are each a hydrogen atom or a substituent; R₇ and R₈ are each a substituent; and Z each independently is an oxygen or sulfur atom, or a divalent hydrocarbon which may contain an oxygen or sulfur atom in the main chain. Substituents represented by R₁ - R₆ in Formulas (2) - (5) are identical to substituents represented by R₁ - R₆ of Formula (1).

In Formulas (2) - (5), substituents represented by R₇ and R₈ include an alkyl group having a carbon number of 1 - 6 (such as a methyl group, an ethyl group, a propyl group and a butyl group), an alkenyl group having a carbon number of 1 - 6 (such as a 1-propenyl group, a 2-propenyl group, a 2-methyl-1-propenyl group, a 2-methyl-2-propenyl group, a 1-butenyl group, a 2-butenyl group and a 3-butenyl group), an aryl group (such as a phenyl group and a naphthyl grouop), an aralkyl group (such as a benzyl group, a fluorobenzyl group and a methoxybenzyl group), an acyl group having a carbon number of 1 - 6 (such as a propylcarbonyl group, a butylcarbonyl group and a pentylcarbonyl group), an alkoxycarbonyl group having a carbon number of 1 - 6 (such as an ethoxycarbonyl group, a propoxycarbonyl group and a butoxycarbonyl group), an alkylcarbamoyl group having a carbon number of 1 - 6 (such as a propylcarbamoyl group and a butylcarbamoyl group) and an alkoxycarbamoyl group (such as an ethoxycarbamoyl group).

In Formulas (2) - (5), an oxygen or sulfur atom, or a divalent hydrocarbon which may contain an oxygen or sulfur atom in the main chain, represented by Z, includes an alkylene group (such as an ethylene group, a trimethylene group, a tetramethylene group, a propylene group, an ethylethylene group, a pentamethylene group, a hexamethylene group, a heptamethylene group, an octamethylene group, a nonamethylene group and a decamethylene group), an alkenylene group (such as a vinylene group and a propenylene group), an alkenylene group (such as an ethynylene group and a 3-pentynylene group), and a carbon atom in the aforesaid alkylene group, an alkenylene group or an alkynylene group may be substituted by an oxygen atom or a sulfur atom.

In the above-described substituents, R₁ is preferably a lower alkyl group (such as a methyl group, an ethyl group and a propyl group) and specifically preferably an ethyl group. Further, R₇ and R₈ are preferably a propyl group, a butyl group, a phenyl group or a benzyl group, and Z is preferably a hydrocarbon group (such as an alkylene group, an alkenylene group or an alkynylene group) containing no oxygen or sulfur atoms.

### (Compound Containing at least Two Oxetane Rings in Molecule)

Further, in this invention, a compound provided with at least two oxetane rings in the molecule, such as represented by following Formulas (6) and (7), can be utilized.

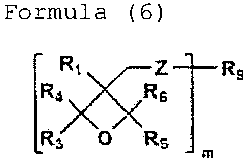

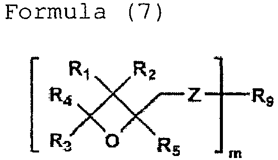

In the formula, Z is identical with a group utilized in aforesaid Formulas (2) - (5), and "m" is an integer of 2 - 4. R₁ - R₆ is a hydrogen atom, a fluorine atom, an alkyl group having a carbon number of 1 - 6 (such as a methyl group, an ethyl group, a propyl group and a butyl group), a fluoroalkyl group having a carbon number of 1 - 6, an allyl group, an aryl group (such as a phenyl group and a naphthyl group), or a furyl group. Herein, in Formula (6), at least one of R₃ - R₆ is a substituent.

In the formula, R₉ is a linear or branched alkylene group, or a linear or branched poly(alkyleneoxy) group, which have a carbon number of 1 - 12; or a divalent group selected from a group comprising following Formulas (9), (10) and (11).

As an example of the above-described branched alkylene group having a carbon number of 1 - 12, an alkylene group represented by following Formula (8) is preferably utilized.

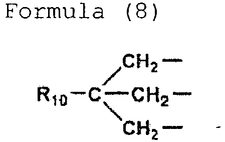

In the formula, R₁₀ is a lower alkyl group (such as a methyl group, an ethyl group and a propyl group).

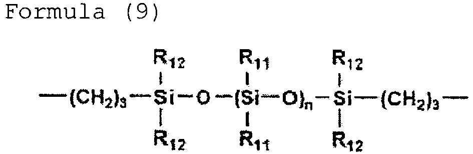

In the formula, n is 0 or an integer of 1 - 2,000, R₁₂ is an alkyl group having a carbon number of 1 - 10 (such as a methyl group, an ethyl group, a propyl group, a butyl group, a pentyl group, a hexyl group, a heptyl group, an octyl group and a nonyl group), R₁₁ is an alkyl group having a carbon number of 1 - 10 (such as a methyl group, an ethyl group, a propyl group, a butyl group, a pentyl group, a hexyl group, a heptyl group, an octyl group and a nonyl group) or a group represented by following Formula (12).

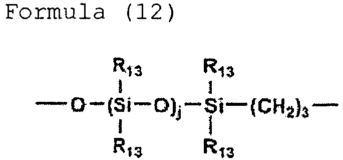

In the formula, j is 0 or an integer of 1 - 100, R₁₃ is an alkyl group having a carbon number of 1 - 10 (such as a methyl group, an ethyl group, a propyl group, a butyl group, a pentyl group, a hexyl group, a heptyl group, an octyl group and a nonyl group).

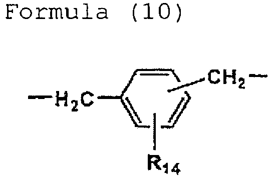

In the formula, R₁₄ is an alkyl group having a carbon number of 1 - 10 (such as a methyl group, an ethyl group, a propyl group, a butyl group, a pentyl group, a hexyl group, a heptyl group, an octyl group and a nonyl group), an alkoxy group having a carbon number of 1 - 10 (such as a methoxy group, an ethoxy group, a propoxy group, a butoxy group and a pentoxy group), a halogen atom (such as a fluorine atom, a chlorine atom, a bromine atom and an iodine atom), a nitro group, a cyano group, a mercapto group, an alkoxycarbonyl group (such as a methoxycarbonyl group, an ethoxycarbonyl group and a butoxycarbonyl group) or a carboxyl group.

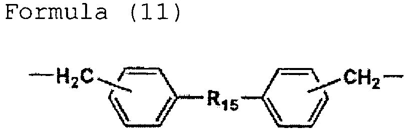

In the formula, R₁₅ is an oxygen atom, a sulfur atom, - NH-, -SO-, -SO₂- -CH₂-, -C(CH₃)₂- or -C(CF₃)₂-.

As an embodiment of a preferable partial structure of a compound having an oxetane ring, which is utilized in this invention, for example, in above-described Formulas (6) and (7), R₁ is preferably a lower alkyl group (such as a methyl group, an ethyl group and a propyl group) and specifically preferably an ethyl group. Further, R₉ is preferably a hexamethylene group or above-described Formula (10) in which R₁₄ is a hydrogen atom.

In above-described Formula (8), R₁₀ is an ethyl group, R₁₂ and R₁₃ are a methyl group and Z is a hydrocarbon group containing no oxygen or sulfur atom.

Further, an example of a preferable embodiment of a compound having an oxetane ring includes compounds represented by following Formula (13).

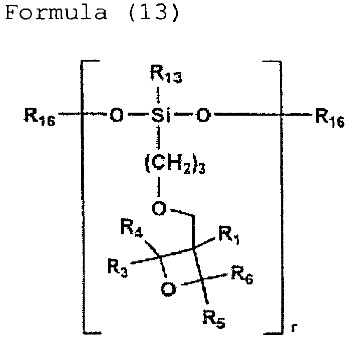

In the formula, r is an integer of 25 - 200, and R₁₆ is an alkyl group having a carbon number of 1 - 4 (such as a methyl group, an ethyl group, a propyl group and a butyl group) or a trialkylsilyl group. R₁, R₃, R₅ and R₆ are identical with substituents represented by R₁ - R₆ in above-described Formula (1). Herein, at least one of R₃ - R₆ is a substituent.

In the following, specific examples of a compound having an oxetane ring, the 2-position of which is substituted, will be shown as exemplary compounds 1 - 15, however, this invention is not limited thereto.
1: Trans-3-tert-butyl-phenyloxetane
2: 3,3,4,4-Tetramethyl-2,2-diphenyloxetane
3: Di[3-ethyl(2-methoxy-3-oxetanyl)]methyl ether
4: 1,4-Bis(2,3,4,4-tetramethyl-3-ethyloxetanyl)butane
5: 1,4-Bis(3-methyl-3-ethyloxetanyl)butane
6: Di(3,4,4-trimethyl-3-ethyloxetanyl)methyl ether
7: 3-(2-Ethyl-hexyloxymethyl)-2,2,3,4-tetramethyloxetane
8: 2-(2-Ethyl-hexyloxy)-2,3,3,4,4-pentamethyloxetane
9: 4,4-Bis[(2,4-dimethyl-3-ethy-3-oxetanyl)methoxy]biphenyl
10: 1,7-Bis(2,3,3,4,4-pentamethyl-oxetanyl)heptane
11: Oxetanyl·silsesquioxane
12: 2-Methoxy-3,3-dimethyloxetane
13: 2,2,3,3-Tetramethyloxetane
14: 2-(4-Methoxyphenyl)-3,3-dimethyloxetane
15: Di(2-(4-methoxyphenyl)-3-methyloxetane-3-yl)ether

Synthesis of a compound having an oxetane ring, at least the 2-position of which is substituted, according to this invention can be performed referring to the literatures described below.
1) Hu Xianming, Richard M. Kellogg, Synthesis, 533 - 538, May 2) A. O. Fitton, J. Hill, D. Ejane, R. Miller, Synth., 12, 1140 3) Toshiro Imai and Shinya Nishida, Can. J. Chem. , vol. 59, 2503 - 2509 4) Nobujiro Shimizu, Shintaro Yamaoka, and Yuho Tsuno, Bull. Chem. Soc. Jpn., 56, 3853 - 3854 5) Walter Fisher and Cyril A. Grob, Helv. Chim. Acta., 61, 2336 6) Chem. Ber., 101, 1850 7) "Heterocyclic Compounds with Tree-and Four-membered Rings", Part Two, Chapter IX, Interscience Publishers, John Wiley & Sons, New York 8) Bull. Chem. Soc. Jpn., 61, 1653 9) Pure Appl. Chem., A29, 915 10) Pure Appl. Chem., A30 (2 & amp;3), 189 (1993)
11) JP-A 6-16804
12) German Patent No. 1,021,858

The content of a compound having an oxetane ring, at least the 2-position of which is substituted, in actinic ray curable ink-jet ink is preferably 1 - 97 weight% and more preferably 30 - 95 weight%.

### (Combination Use of Oxetane Compound and Other Monomer)

Further, a compound having an oxetane ring, at least the 2-position of which is substituted, according to this invention may be utilized alone, however, may be also utilized in combination of two types having different structures, and a photo-polymerizable compound such as photo-polymerizing monomer or polymerizable monomer, which will be described later, can be utilized in combination. In the case of combination use, the mixing ratio is preferably adjusted to make the content of a compound having an oxetane ring, at least the 2-position of which is substituted, being 10 - 98 weight% in the mixture, and it is preferable to make the content of a polymerizing compound such as other photo-polymerizing monomer or polymerizing monomer of 2 - 90 weight%.

### (Oxetane Compound Only 3-Position of Which is Substituted)

In this invention, an oxetane compound, the 2-position of which is substituted, described above can be utilized in combination with a conventionally well known oxetane compound and specifically preferably with an oxetane compound only the 3-position of which is substituted.

Herein, as an oxetane compound only the 3-position of which is substituted, utilized can be those well known in the art such as described in JP-A Nos. 2001-220526 and 2001-310937.

An oxetane compound, only the 3-position of which is substituted, includes compounds represented by following Formula (14).

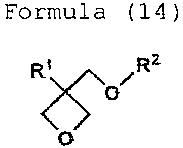

In the formula, R¹ is a hydrogen atom, an alkyl group having a carbon number of 1 - 6 such as a methyl group, an ethyl group, a propyl group and a butyl group; a fluoroalkyl group having a carbon number of 1 - 6, an allyl group, an aryl group, a furyl group or a thienyl group. R² is an alkyl group having a carbon number of 1 - 6 such as a methyl group, an ethyl group, a propyl group and a butyl group; an alkenyl group having a carbon number of 2 - 6 such as a 1-propenyl group, a 2-propenyl group, a 2-methyl-1-propenyl group, a 2-methyl-2-propenyl group, a 1-butenyl group, a 2-butenyl group and a 3-butenyl group; a group provided with an aromatic ring such as a phenyl group, a benzyl group, a fluorobenzyl group, a methoxybenzyl group and a phenoxyethyl group; an alkylcarbonyl group having a carbon number of 2 - 6 such as an ethylcarbonyl, a propylcarbonyl group and a butylcarbonyl group; an alkoxycarbonyl group having a carbon number of 2 - 6 such as an ethoxycarbonyl group, a propoxycarbonyl group and a butoxycarbonyl group; an N-alkylcarbonyl group having a carbon number of 2 - 6 such as an ethylcarbamoyl group, a propylcarbamoyl group, a butylcarbamoyl group and a pentylcarbamoyl group. As an oxetane compound utilized in this invention, a compound having one oxetane ring is specifically preferable with respect to excellent tackiness and a superior working property due to low viscosity.

An example of an oxetane compound provided with two oxetane rings includes compounds represented by following Formula (15).

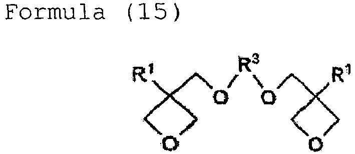

In Formula (15), R¹ is identical with those in above-described Formula (14). R³ is a linear or branched alkylene group such as an ethylene group, a propylene group and a butylenes group; a linear or branched poly(alkyleneoxy) group such as a poly(ethyleneoxy) group and a poly(propyleneoxy) group; a linear or branched unsaturated hydrocarbon group such as a propenylene group, a methylpropenylene group and a butenylene group; or a carbonyl group or an alkylene group containing a carbonyl group; an alkylene group containing a carboxyl group or an alkylene group containing a carbamoyl group.

Further, R³ includes also a polyvalent group selected from groups represented by following Formulas (16), (17) and (18).

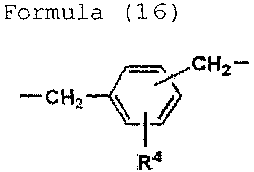

In Formula (16), R⁴ is a hydrogen atom, an alkyl group having a carbon number of 1 - 4 such as a methyl group, an ethyl group, a propyl group and a butyl group; an alkoxy group having a carbon number of 1 - 4 such as a methoxy group, an ethoxy group, a propoxy group and a butoxy group; a halogen atom such as a chlorine atom and a bromine atom; a nitro group, a cyano group, a mercapto group, a lower alkoxycarbonyl group, a carboxyl group or a carbamoyl group.

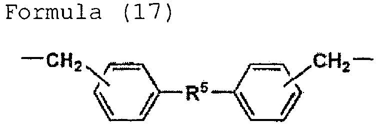

In Formula (17), R⁵ is an oxygen atom, a sulfur atom, a methylene group, NH, SO, SO₂ C(CF₃)₂ or C(CH₃)₂.

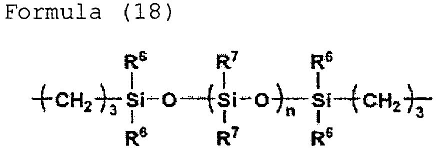

In Formula (18), R⁶ is an alkyl group having a carbon number of 1 - 4 such as a methyl group, an ethyl group, a propyl group and a butyl group; or an aryl group. n is 0 or an integer of 1 - 2,000. R⁷ is an alkyl group having a carbon number of 1 - 4 such as a methyl group, an ethyl group, a propyl group and a butyl group; or an aryl group. R⁷ also includes a group selected from groups represented by following Formula (19).

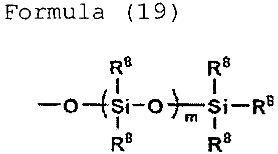

In Formula (19), R⁸ is an alkyl group having a carbon number of 1 - 4 such as a methyl group, an ethyl group, a propyl group and a butyl group; or an aryl group. m is 0 or an integer of 1 - 100.

Specific examples of a compound having two oxetane rings include the following exemplary compounds.

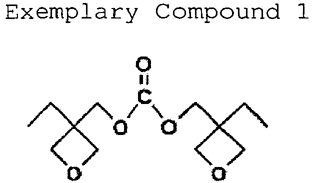

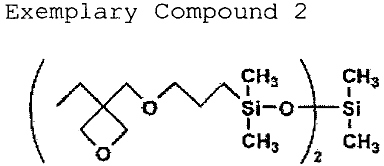

Exemplary compound 1 is a compound of aforesaid Formula (15) in which R¹ is an ethyl group and R³ is a carboxyl group. Further, exemplary compound 2 is a compound of aforesaid Formula (15), in which R¹ is an ethyl group and R³ is a compound of aforesaid Formula (18), in which R⁶ and R⁷ are a methyl group and n is 1.

In a compound having two oxetane rings, examples other than the above described compounds are compounds represented by following Formula (20). In Formula (20), R¹ is identical with R¹ in aforesaid Formula (14).

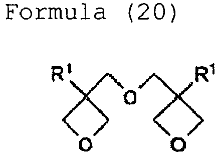

Further, an example of a compound having 3 - 4 oxetane rings includes compounds represented by following Formula (21).

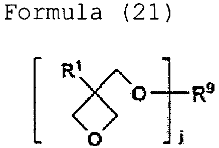

In Formula (21), R¹ is identical with R¹ in aforesaid Formula (14). R⁹ includes a branched alkylene group having a carbon number of 1 - 12 such as groups represented by following A - C, a branched poly(alkyleneoxy) group such as groups represented by following D, or a branched poly(siloxy) group such as groups represented by following E. j is 3 or 4.

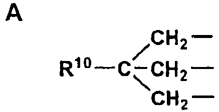

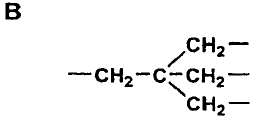

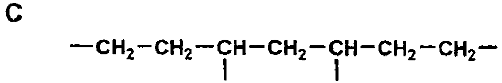

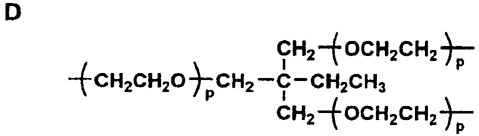

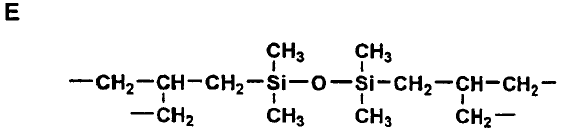

In above-described A, R¹⁰ is a lower alkyl group such as a methyl group, an ethyl group and a propyl group. Further, in above-described D, p is an integer of 1 - 10.

An example of a compound having 3 - 4 oxetane rings includes exemplary compound 3.

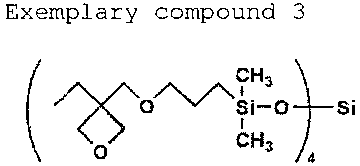

Further, an example of a compound having 1 - 4 oxetane rings other than those explained above includes compounds represented by following Formula (22).

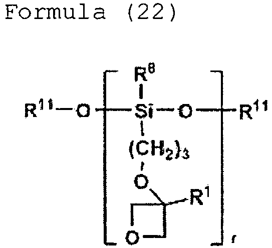

In Formula (22), R⁸ is identical with R⁸ in aforesaid Formula (19). R¹¹ is an alkyl group having a carbon number of 1 - 4 such as a methyl group, an ethyl group, a propyl group and a butyl group; or a trialkylsilyl group, and r is 1 - 4.

Preferable specific examples of an oxetane compound according to this invention include exemplary compounds 4, 5 and 6, which are described below.

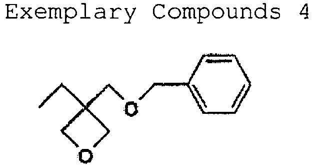

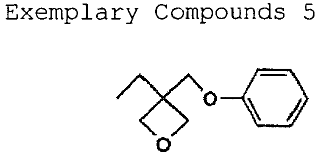

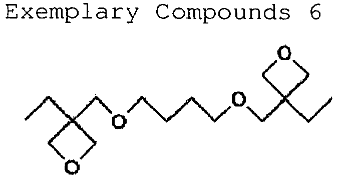

A manufacturing method of the above-described compounds having an oxetane ring is not specifically limited and may be referred to a conventionally well known method such as an oxetane ring synthesis method from diol, which is disclosed by D. B. Pattison (J. Am. Chem. Soc., 3455, 79 (1957)). Further, in addition to these, listed are compounds provided with 1 - 4 oxetane rings and having a high molecular weight of approximately 1,000 - 5,000. Specific example compounds thereof include following exemplary compounds 7 - 25.

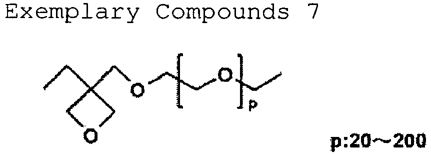

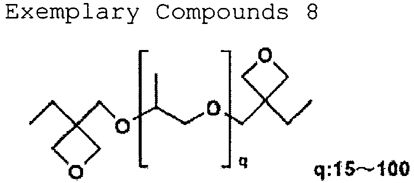

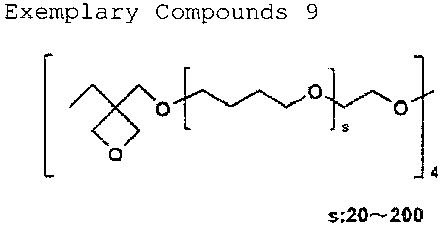

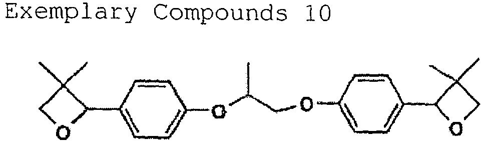

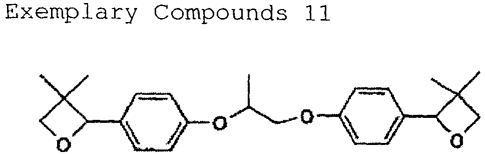

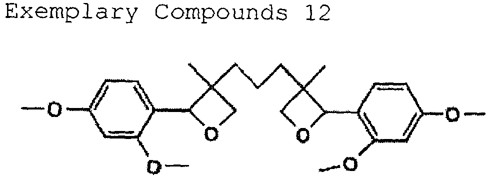

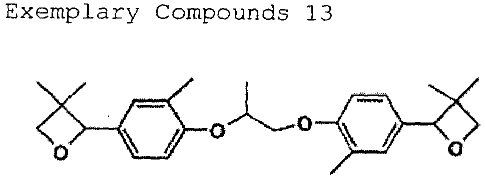

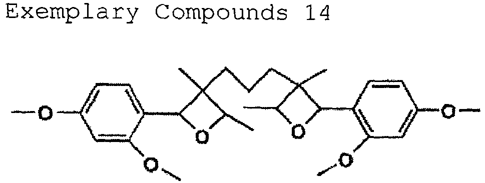

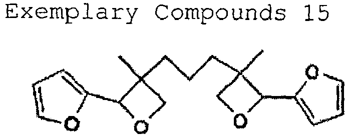

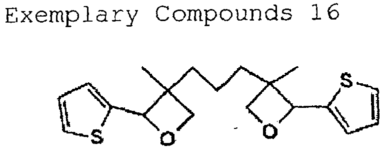

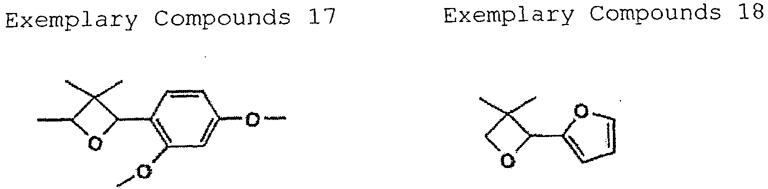

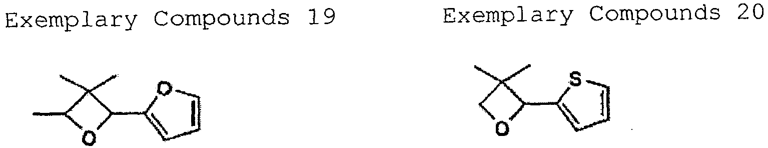

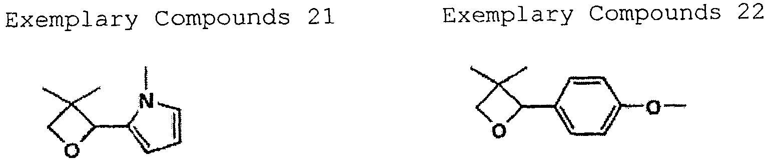

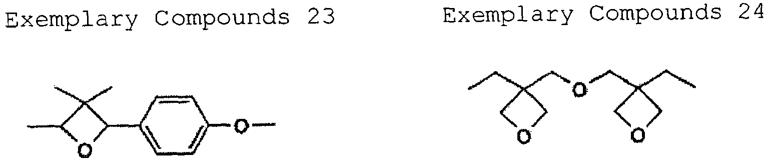

In cationic polymerizable ink utilized in this invention, an epoxy compound can be utilized together with a compound having an oxetane ring at least the 2-position of which is substituted.

As an epoxy compound according to this invention, either monomer of a compound having an epoxy group or oligomer thereof can be utilized. Specifically, listed are an aromatic epoxy compound, an alicyclic epoxy compound and an aliphatic epoxy compound, which are conventionally well known in the art. Hereinafter, an epoxy compound means monomer or oligomer thereof. Oligomer in this invention is preferably a compound having a low molecular weight and oligomer having a molecular weigh of less than 1,000 is more preferable.

A preferable aromatic epoxy compound is di- or poly-glycidyl ether, which is prepared by a reaction of a polyhydric phenol having at least one aromatic nucleus or alkylene oxide adduct thereof, with epichlorohydrin, and for example includes di- or poly-glycidyl ether of bisphenol A or alkylene oxide adduct thereof, di- or poly-glycidyl ether of hydrogenated bisphenol A or alkylene oxide adduct thereof, and novolak type epoxy resin. Herein, alkylene oxide includes such as ethylene oxide and propylene oxide.

An alicyclic epoxy compound is preferably a cyclohexeneoxide or cyclopenteneoxide containing compound, which is prepared by epoxidation of a compound having at least one cycloalkane ring such as a cyclohexene or cyclopentene ring by an appropriate oxidant such as hydrogen peroxide and peracid, and specifically includes compounds described below.

A preferable aliphatic epoxy compound is such as di- or poly-glycidyl ether of aliphatic polyhydric alcohol or alkyleneoxide adduct thereof, and typically includes diglycidyl ether of alkylene glycol such as diglycidyl ether of ethylene glycol, diglycidyl ether of propylene glycol or diglycidyl ether of 1,6-hexanediol; polyglycidyl ether of polyhydric alcohol such as di- or tri-glycidyl ether of glycerin or alkyleneoxide adduct thereof; and diglycidyl ether of polyalkylene glycol such as diglycidyl ether of polyethylene glycol or alkylene oxide adduct thereof and diglycidyl ether of polypropylene glycol or alkylene oxide adduct thereof. Herein alkylene oxide includes such as ethylene oxide and propylene oxide.

Further, in addition to these compounds, monoglycidyl ether of aliphatic higher alcohol as monomer having one oxirane ring in a molecule and monoglycidyl ether of phenol or cresol can be also utilized. Among these epoxy compounds, in consideration of a rapid curing capability, an aromatic epoxy compound and an alicyclic epoxy compound are preferred and an alicyclic epoxy compound is specifically preferred. In this invention, one type of the above-described epoxy compounds alone may be utilized, however, not less than two types may be also utilized in combination.

As aforesaid alicyclic epoxy compound, an alicyclic epoxy compounds represented by following Formula (A), (I) or (II) are preferable.

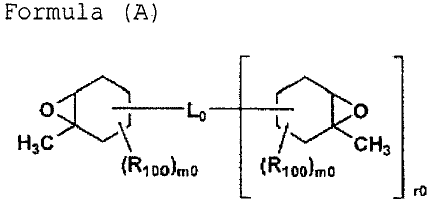

In the Formula (A), R₁₀₀ is a substituent, m0 is 0 - 2, and r0 is 1 - 3. L₀ is an r0 + 1 valent connecting group, which may contain an oxygen atom or a sulfur atom in the main chain and has a carbon number of 1 - 15, or a single bond.

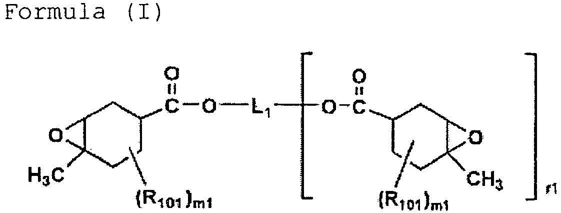

In the formula, R₁₀₁ is a substituent, m1 is 0 - 2, r1 is 1 - 3. L₁ is an r1 + 1 valent connecting group, which may contain an oxygen atom or a sulfur atom in the main chain and has a carbon number of 1 - 15, or a single bond.

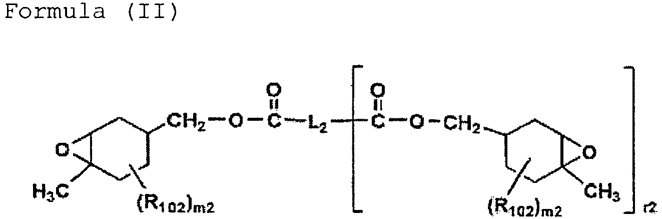

In the formula, R₁₀₂ is a substituent, m2 is 0 - 2, r2 is 1 - 3. L₂ is an r2 + 1 valent connecting group, which may contain an oxygen atom or a sulfur atom in the main chain and has a carbon number of 1 - 15, or a single bond.

In aforesaid Formula (A), (I) or (II), substituents represented by R₁₀₀, R₁₀₁ or R₁₀₃ include a halogen atom (such as a chlorine atom, a bromine atom and a fluorine atom), an alkyl group having a carbon number of 1 - 6 (such as a methyl group, an ethyl group, a propyl group, an isopropyl group and a butyl group), an alkoxy group having a carbon number of 1 - 6 (such as a methoxy group, an ethoxy group, a propoxy group, an isopropoxy group, a n-butoxy group and a t-butoxy group), an acyl group (such as an acetyl group, a propionyl group and a trifluoroacetyl group), an acyloxy group (such as an acetoxy group, a propionyloxy group and a trifluoroacetoxy group), and an alkoxycarbonyl group (such as a methoxycarbonyl group, an ethoxycarbonyl group and a t-butoxycarbonyl group). A preferable substituent is an alkyl group, an alkoxy group or an alkoxycarbonyl group.

m0, m1 and m2 are an integer of 0 - 2, however, are preferably 0 or 1. Further, m0, m1 and m2 may be different from each other in the same molecule.

L₀ is an r0 + 1 valent connecting group, which may contain an oxygen atom or a sulfur atom in the main chain and has a carbon number of 1 - 15, or a single bond; L₁ is an r1 + 1 valent connecting group, which may contain an oxygen atom or a sulfur atom in the main chain and has a carbon number of 1 - 15, or a single bond; and L₂ is an r2 + 1 valent connecting group, which may contain an oxygen atom or a sulfur atom in the main chain and has a carbon number of 1 - 15, or a single bond.

An example of a divalent connecting group, which may contain an oxygen atom or a sulfur atom in the main chain and has a carbon number of 1 - 15, includes the following groups and groups formed by combining these groups with a plural number of -0- group, -S- group, -CO- group and -CS- group.
Methylene group [-CH₂-]
Ethylidene group [>CHCH₃]
Isopropylidene group [>C(CH₃)₂]
1,2-methylene group [-CH₂CH₂-]
1,2-propylene group [-CH(CH₃)CH₂-]
1,3-Propanediyl group [-CH₂CH₂CH₂-]
2,2-Dimethyl-1,3-propanediyl group [-CH₂C(CH₃)₂CH₂-]
2,2-Dimethoxy-1,3-propanediyl group
[-CH₂C(OCH₃)₂CH₂-]
2,2-Dimethoxymethyl-1,3-propanediyl group
[-CH₂C(CH₂OCH₃)₂CH₂-]
1-Methyl-1,3-propanediyl group [-CH(CH₃)CH₂CH₂-]
1,4-Butanediyl group [-CH₂CH₂CH₂CH₂-]
1,5-Pentanediyl group [-CH₂CH₂CH₂CH₂CH₂-]
Oxydiethylene group [-CH₂CH₂OCH₂CH₂-]
Thiodiethylene group [-CH₂CH₂SCH₂CH₂-]
3-Oxthothiodiethylene group -CH₂CH₂SOCH₂CH₂-]
3,3-Dioxthothiodiethylene group [-CH₂CH₂SO₂CH₂CH₂-]
1,4-Dimethyl-3-oxa-1,5-pentadiyl group
[-CH(CH₃)CH₂OCH(CH₃)CH₂-]
3-Oxopentanediyl group [-CH₂CH₂COCH₂CH₂-]
1,5-Dioxo-3-oxapentanediyl group [-COCH₂OCH₂CO-]
4-Oxa-1,7-heptanediyl group [-CH₂CH₂CH₂OCH₂CH₂CH₂-]
3,6-Dioxa-1,8-octanediyl group
[-CH₂CH₂OCH₂CH₂OCH₂CH₂-]
1,4,7-Trimethyl-3,6-dioxa-1,8-octanediyl group
[-CH(CH₃)CH₂O-CH(CH₃)CH₂OCH(CH₃)CH₂-]
5,5-Dimethyl-3,7-dioxa-1,9-nonanediyl group
[-CH₂CH₂OCH₂C(CH₃)₂CH₂OCH₂CH₂-]
5,5-Dimethoxy-3,7-dioxa-1,9-nonanediyl group
[-CH₂CH₂OCH₂C(OCH₃)₂CH₂OCH₂CH₂-]
5,5-Dimethoxymethyl-3,7-dioxa-1,9-nonanediyl group
[-CH₂CH₂OCH₂C(CH₂OCH₃)₂CH₂OCH₂CH₂-]
4,7-Dioxo-3,8-dioxa-1,10-decanediyl group
[-CH₂CH₂OCOCH₂CH₂COOCH₂CH₂-]
3,8-Dioxo-4,7-dioxa-1,10-decanediyl group
[-CH₂CH₂COOCH₂CH₂OCOCH₂CH₂-]
1,3-Cyclopentanediyl group [-1,3-C₅H₈-]
1,2-Cyclohexanediyl group [-1,2-C₆H₁₀-]
1,3-Cyclohexanediyl group [-1,3-C₆H₁₀-]
1,4-Cyclohexanediyl group [-1,4-C₆H₁₀-]
2,5-Tetrahydrofurandiyl group [2,5-C₄H₆O-]
p-Phenylene group [-p-C₆H₄-]
m-Phenylene group [-m-C₆H₄-]
α,α'-o-Xylylene group [-o-CH₂-C₆H₄-CH₂-]
α,α'-m-Xylylene group [-m-CH₂-C₆H₄-CH₂-]
α,α'-p-Xylylene group [-p-CH₂-C₆H₄-CH₂-]
Furan-2,5-diyl-bismethylene group [2,5-CH₂-C₄H₂O-CH₂-]
Thiophen-2,5-diyl-bismethylene [2,5-CH₂-C₄H₂S-CH₂-]
i-Propylidenbis-p-phenylene [-p-C₆H₄-C(CH₃)₂-p-C₆H₄-]

A not less than tri-valent connecting group includes groups which are formed by removing necessary hydrogen atoms at arbitrary positions from the divalent groups listed above, and groups formed by combining them with a plural number of - O- group, -S- group, -CO- group and -CS- group.

L₀, L₁ and L₂ each may be provided with a substituent. Examples of a substituent include a halogen atom (such as a chlorine atom, a bromine atom and a fluorine atom), an alkyl group having a carbon number of 1 - 6 (such as a methyl group, an ethyl group, a propyl group, an isopropyl group and a butyl group), an alkoxy group having a carbon number of 1 - 6 (such as a methoxy group, an ethoxy group, a n-propoxy group, an iso-propoxy group, a n-butoxy group and a t-butoxy group), an acyl group (such as an acetyl group, a propionyl group and a trifluoroacetyl group), an acyloxy group (such as an acetoxy group, a propionyloxy group and a trifluoroacetoxy group) and an alkoxycarbonyl group (such as a methoxycarbonyl group, an ethoxycarbonyl group and a t-butoxycarbonyl group). A preferable substituent is an alkyl group, an alkoxy group or an alkoxycarbonyl group. L₀, L₁ and L₂ each are preferably a divalent connecting group which may contain an oxygen atom or a sulfur atom in the main chain and having a carbon number of 1 - 8, and more preferable is a divalent connecting group the main chain of which is comprised of only carbon atoms and having a carbon number of 1 - 5.

In this invention, a more preferable alicyclic epoxy compound is a compound represented by either of following Formula (III) or (IV) is preferred.

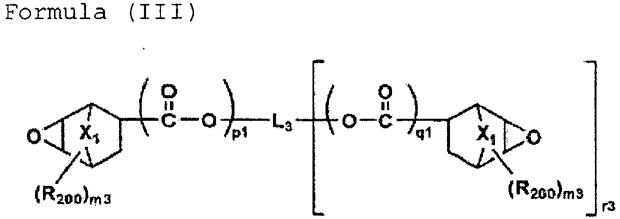

In the formula, R₂₀₀ is an aliphatic group at positions except α and β positions of an oxirane ring, and m3 is 0 - 2. X₁ is -(CH₂)ₙ₀- or -(O)ₙ₀-, and n0 is 0 or 1. p1 and q1 each are 0 or 1 and are never simultaneously 0. r3 is 1 - 3. L₃ is an r3 + 1 valent connecting group provided with a branched structure, which may contain an oxygen atom or a sulfur atom in the main chain and has a carbon number of 1 - 15, or a single bond.

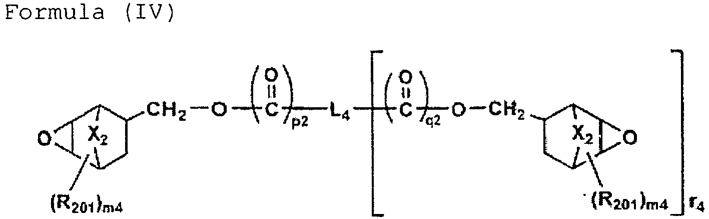

In the formula, R₂₀₁ is an aliphatic group at positions except α and β positions of an oxirane ring, and m4 is 0 - 2. X₂ is -(CH₂)ₙ₁- or -(O)ₙ₁-, and n1 is 0 or 1. p2 and q2 each are 0 or 1 and are never simultaneously 0. r4 is 1 - 3. L₄ is an r4 + 1 valent connecting group provided with a branched structure, which may contain an oxygen atom or a sulfur atom in the main chain and has a carbon number of 1 - 15, or a single bond.

In above Formulas (III) and (IV), R₂₀₀ and R₂₀₁ are an aliphatic group. The aliphatic group includes an alkyl group having a carbon number of 1 - 6 (such as a methyl group, an ethyl group, a propyl group, an isopropyl group and a butyl group), a cycloalkyl group having a carbon number of 3 - 6 (such as a cyclopropyl group, a cyclobutyl group, a cyclopentyl group and a cyclohexyl group), an alkenyl group having a carbon number of 1 - 6 (such as a vinyl group, a 1-propenyl group, a 2-propenyl group and a 2-butenyl group), an alkynyl group having a carbon number of 1 - 6 (such as an acetylenyl group, a 1-propynyl group, a 2-propynyl group and a 2-butynyl group). Preferable is an alkyl group having a carbon number of 1 -3, and more preferable are a methyl group and an ethyl group.

m3 and m4 are 0 - 2, however, preferably not less than 1.

X₁ is -(CH₂)ₙ₀- or -(O)ₙ₀-, and X₂ is -(CH₂)ₙ₁- or -(O)ₙ₁-. n0 and n1 is 0 or 1, and X₁ and X₂ are not present when n0 and n1 are 0.

m3 + n0 or m4 + n1 is preferably not less than 1.

L₃ is an r3 + 1 valent connecting group provided with a branched structure, which may contain an oxygen atom or a sulfur atom in the main chain and has a carbon number of 1 - 15, or a single bond; L₄ is an r4 + 1 valent connecting group provided with a branched structure, which may contain an oxygen atom or a sulfur atom in the main chain and has a carbon number of 1 - 15, or a single bond. A divalent connecting group, which may contain an oxygen atom or a sulfur atom in the main chain and has a carbon number of 1 - 15, includes the following groups and groups formed by combining said groups with a plural number of -O- group, -S-group, -CO- group and -CS- group.
Ethylidene group [>CHCH₃]
Isopropylidene group [>C(CH₃)₂]
2,2-Dimethyl-1,3-propanediyl group [-CH₂C(CH₃)₂CH₂-]
2,2-Dimethoxy-1,3-propanediyl group
[-CH₂C(OCH₃)₂CH₂-]
2,2-Dimethoxymethyl-1,3-propanediyl group
[-CH₂C(CH₂OCH₃)₂CH₂-]
1-Methyl-1,3-propanediyl group [-CH(CH₃)CH₂CH₂-]
1,4-Dimethyl-3-oxa-1,5-pentadiyl group
[-CH(CH₃)CH₂OCH(CH₃)CH₂-]
1,4,7-Trimethyl-3,6-dioxa-1,8-octanediyl group
[-CH(CH₃)CH₂OCH(CH₃)CH₂OCH(CH₃)CH₂-]
5,5-Dimethyl-3,7-dioxa-1,9-nonanediyl group
[-CH₂CH₂OCH₂C(CH₃)₂CH₂OCH₂CH₂-]
5,5-Dimethoxy-3,7-dioxa-1,9-nonanediyl group [-CH₂CH₂OCH₂C(OCH₃)₂CH₂OCH₂CH₂-]
5,5-Dimethoxymethyl-3,7-dioxa-1,9-nonanediyl group [-CH₂CH₂OCH₂C(CH₂OCH₃)₂CH₂OCH₂CH₂-]
Isopropylidenbis-p-phenylene group [-p-C₆H₄-C(CH₃)₂-p-C₆H₄-]

A connecting group of not less than trivalent includes a group, which is formed by removing a necessary number of hydrogen atoms at arbitrary portions from a divalent connecting group descried above, and a group comprising a combination thereof with a group, which is formed combining a plural number of -O- group, -S- group, -CO- group and -CS- group.

L₃ and L₄ may be provided with a substituent. Examples of the substituent include a halogen atom (such as a chlorine atom, a bromine atom and a fluorine atom), an alkyl group having a carbon number of 1 - 6 (such as a methyl group, an ethyl group, a propyl group, an isopropyl group and a butyl group), an alkoxy group having a carbon number of 1 - 6 (such as a methoxy group, an ethoxy group, a n-propoxy group, an iso-propoxy group, a n-butoxy group and a t-butoxy group), an acyl group (such as an acetyl group, a propionyl group and a trifluoroacetyl group), an acyloxy group (such as an acetoxy group, a propionyloxy group and a trifluoroacetoxy group) and an alkoxycarbonyl group (such as a methoxycarbonyl group, an ethoxycarbonyl group and a t-butoxycarbonyl group). A preferable substituent is a halogen atom, an alkyl group and an alkoxy group.

In the following, exemplary compounds of Formulas (A), (I), (II), (III) and (IV) will be shown.

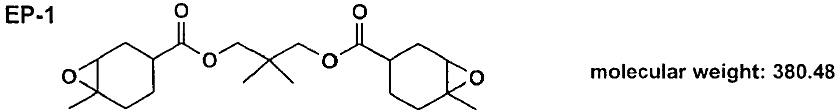

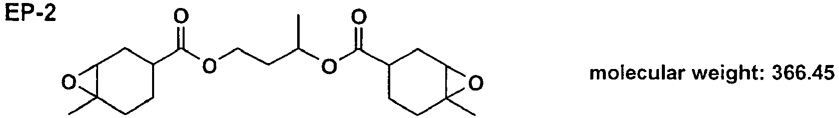

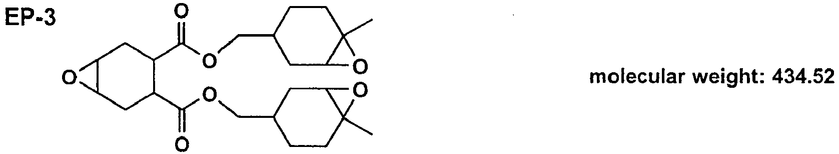

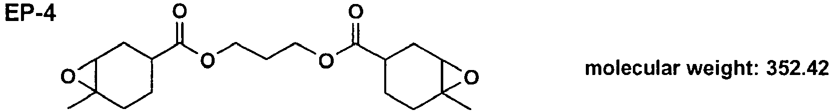

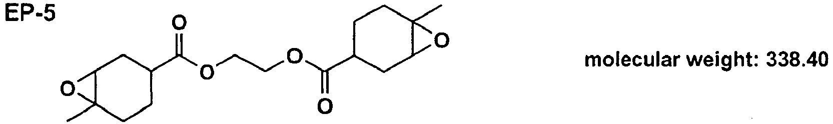

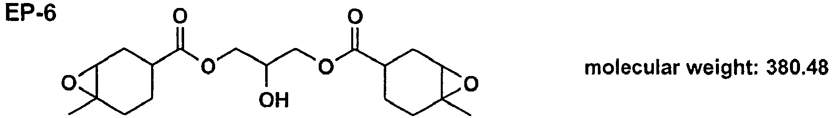

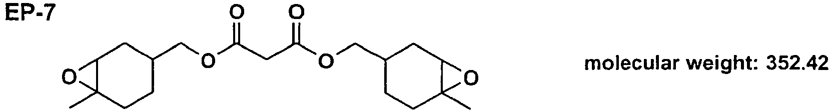

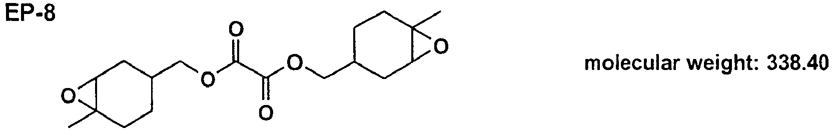

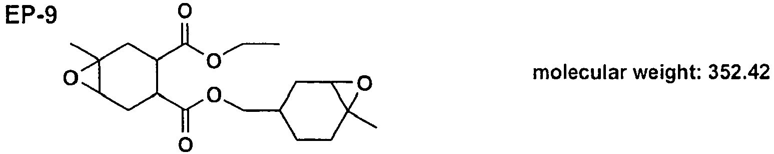

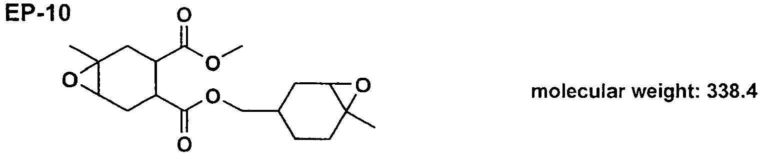

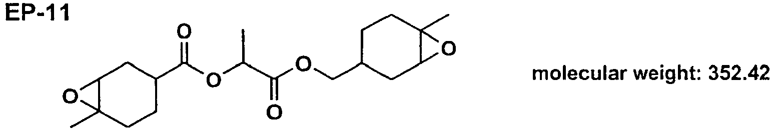

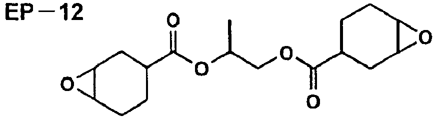

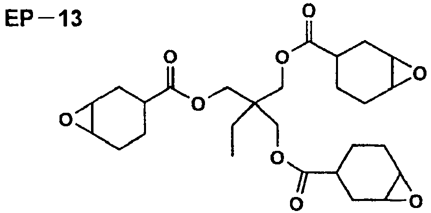

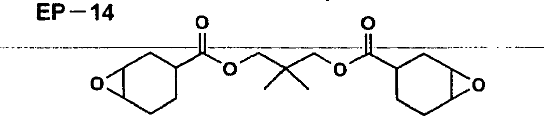

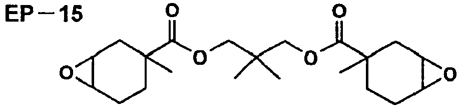

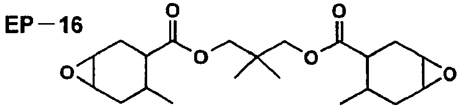

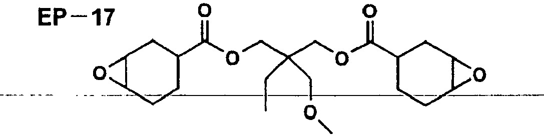

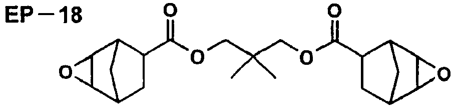

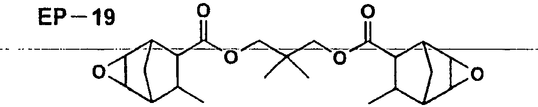

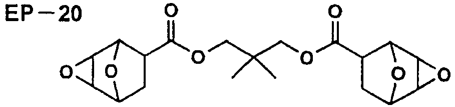

The added amount of an alicyclic epoxy compound is preferably 10 - 80 weight% in the total ink. In the case of less than 10 weight%, the curing capability is badly varied depending on curing environment (temperature, humidity) to make the composition unusable. In the case of over 80 weight%, film physical properties become weak to make the composition unusable. In this invention, one type of an alicyclic epoxy compound may be utilized alone; however, not less than two types may be also utilized in appropriate combination.

Further, these alicyclic epoxy compounds, although the manufacturing method is not specifically limited, can be synthesized referring to, for example, the forth edition, Experimental Chemistry Course 20, Organic Synthesis II, p. 213 -, published by Maruzen KK Shuppan (1992); "The Chemistry of Heterocyclic Compounds-Small Ring Heterocycles part 3, Oxiranes", edited by Alfred Hasfner, John & Willey and Sons, An Interscience Publication, New York (1985); Yoshimura, Adhesion vol. 29, No. 12, 32 (1985), Yoshimura, Adhesion vol. 30, No. 5, 42 (1986), Yoshimura, Adhesion vol. 30, No. 7, 42 (1986), JP-A 11-100378, Japanese Patent Nos. 2,906,245 and 2,926,262.

In photo-curable ink according to this invention, it is also preferable to incorporate epoxydated fatty acid ester or epoxidated fatty acid glyceride as an epoxy compound.

To incorporate epoxydated fatty acid ester or epoxidated fatty acid glyceride in combination with a system of oxetane compound/alicyclic epoxy compound, is preferable with respect to safety·environment such as AMES and sensitizing, skin irritation and odor, as well as can solve conventional problems such as generation of wrinkles due to curing shrinkage and poor curing capability and poor ejection behavior, which depend on curing environment (temperature, humidity).

As utilizable epoxidated fatty acid ester and epoxidated fatty acid glyceride, fatty acid ester and fatty acid glyceride, in which an epoxy group is introduced, can be employed without specific limitation.

Epoxidated fatty acid ester is those manufactured by epoxidation of oleic acid ester, and such as methyl epoxystearate, butyl epoxystearate and octyl epoxystearate are utilized. Further, epoxidated fatty acid glyceride is those manufactured by epoxidation of such as soybean oil, linseed oil and castor oil, and such as epoxidated soybean oil, epoxidated linseed oil and epoxidated castor oil are utilized.

The added amount of these epoxy compounds is preferably not less than 30 weight% based on the total ink weight.

As a photo-polymerization initiator utilized in cationic polymerizable ink, a photo-induced acid generator, which generates acid by ultraviolet irradiation, is preferably utilized.

As a photo-induced acid generator utilized in cationic polymerizable ink, a compound utilized in chemical amplification type photoresist and photo-cationic polymerization is employed (refer to "Organic Materials for Imaging", pp. 187 - 192, Bunshin Shuppan (1993)). Compounds preferably utilized in this invention are listed bellow.

Firstly, listed are salt of B(C₆F₅)₄⁻, PF₆⁻, AsF₆⁻ and SbF₆⁻; and sulfonate such as p-CH₃C₆H₄SO₃⁻ and p-CF₃SO₃⁻; of aromatic onium compounds such as diazonium, ammonium, iodonium, sulfonium and phosphonium.

Secondly, listed are sulfonated compounds which generate sulfonic acid.

Thirdly, halogenides which generate hydrogen halogenide can be also utilized.

Fourthly, listed are iron allene complexes.

A cationic photo-polymerization initiator preferably utilized in this invention includes a photo-induced acid generator such as aryl sulfonium salt derivatives (such as Silacure UVI-6990 and Silacure UVI-6974 manufactured by Union Carbide Corp.; Adekaoptomer SP-150, Adekaoptomer SP-152, Adekaoptomer SP-170 and Adekaoptomer SP-172 manufactured by Asahi Denka Co., Ltd.), allyl iodonium salt derivatives (such as RP-2074, manufactured by Rohdia Corp.), allene-ion complex derivatives (such as Irgacure 261, manufactured by Ciba Geigy Corp.), diazonium salt derivatives, triazine type initiators and other halogenides. A cationic photo-polymerization initiator is preferably incorporated at a ratio of 0.2 - 20 weight parts against 100 weight parts of a compound having cationic polymerizing capability. It is difficult to prepare a cured product when the content of photo-polymerization initiator is less than 0.2 weight parts, while there is no further improving effect of curing when the amount is over 20 weight parts. These photo-cationic polymerization initiators may be utilized by selecting one type or not less than two types.

In cationic polymerizable ink, as a photo-induced acid generator to be a polymerization initiator, those not to generate benzene by actinic ray irradiation are preferable, and onium salt such as iodonium salt and sulfonium salt is preferable. Specifically, it indicates that an amount of benzene, which is generated when an image having approximately 100 m² with a thickness of 15 µm is printed by use of ink containing 5 weight% of onium salt (a photo-induced acid generator) in the ink composition and actinic rays as much as sufficiently decompose the photo-induced acid generator in a state of keeping the ink film surface at 30 °C are irradiated, is extremely small as not more than 5 µg or none. As said onium salt, sulfonium salt or iodonium salt is preferable, and those having a substituent on a benzene ring, which bonds to S⁺ or I⁺, satisfy the above conditions. The sulfonium salt is preferably a sulfonium salt compound represented by aforesaid Formulas 1 - 4. Those having a substituent on a benzene ring which bonds to S⁺ of sulfonium salt satisfy the above conditions.

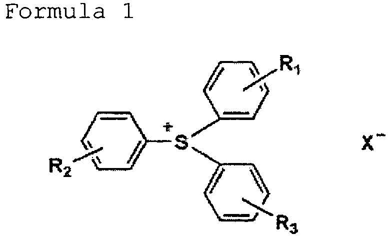

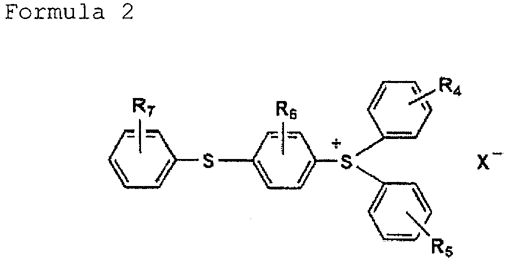

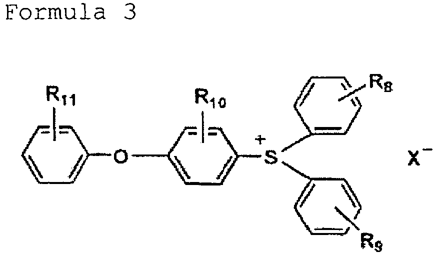

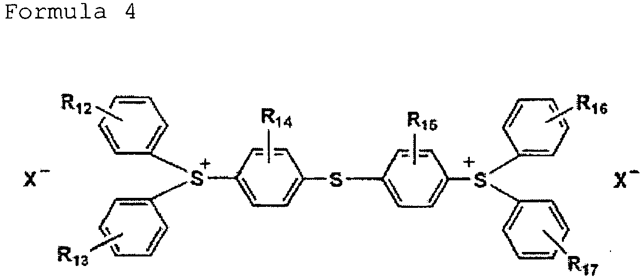

In aforesaid Formulas 1 - 4, R₁ - R₁₇ each are a hydrogen atom or a substituent. However, R₁ - R₃ are never a hydrogen atom at the same time; R₄ - R₇ are never a hydrogen atom at the same time; R₈ - R₁₁ are never a hydrogen atom at the same time; and R₁₂ - R₁₇ are never a hydrogen atom at the same time.

A substituent represented by R₁ - R₁₇ includes an alkyl group such as a methyl group, an ethyl group, a propyl group, a butyl group, an isobutyl group, a t-butyl group, a pentyl group and a hexyl group; an alkoxy group such as a methoxy group, an ethoxy group, a propoxy group, a butoxy group, a hexyloxy group, a decyloxy group and a dodecyloxy group; a carbonyl group such as an acetoxy group, a propionyloxy group, a decylcarbonyloxy group, a dodecylcarbonyloxy group, a methoxycarbonyl group, an ethoxycarbonyl group and a benzoyloxy group; a phenylthio group; a halogen atom such as a fluorine atom, a chlorine atom, a bromine atom and an iodine atom; a cyano group; a nitro group and a hydroxyl group.

X is a non-nucleophilic anionic residual group, and includes a halogen atom such as F, Cl, Br and I; B(C₆F₅)₄, R₁₈COO, R₁₈SO₃, SbF₆, AsF₆, PF₆ and BF₄. However, R₁₈ and R₁₉ each are an alkyl group such as a methyl group, an ethyl group, a propyl group and a butyl group; a halogen atom such as a fluorine atom, a chlorine atom, a bromine atom and an iodine atom; a nitro group, a cyano group, an alkyl group or a phenyl group, which may be substituted by an alkoxy group such as a methoxy group and an ethoxy group. Among them, preferable are B(C₆F₅)₄ and PF₆ with respect to safety.

The above-described compounds can be easily synthesized by a method well known in the art similarly to photo-induced acid generators described in The Chemical Society of Japan Vol. 1, No. 11 (1998) and "Organic Materials for Imaging", Bunshin Shuppan (1993).

In this invention, sulfonium salt represented by Formulas 1 - 4 is specifically preferably at least one type of sulfonium salt selected from following Formulas 5 - 13. X is a non-nucleophilic anionic residual group, similar to those described before.

Further, a sulfonium salt selected from aforesaid Formulas 1 - 4 is preferably at least one type selected from following Formulas 5 - 13.

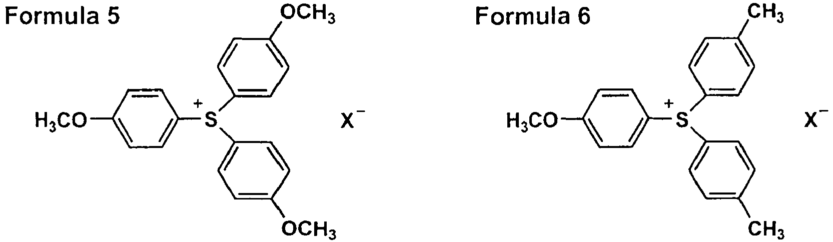

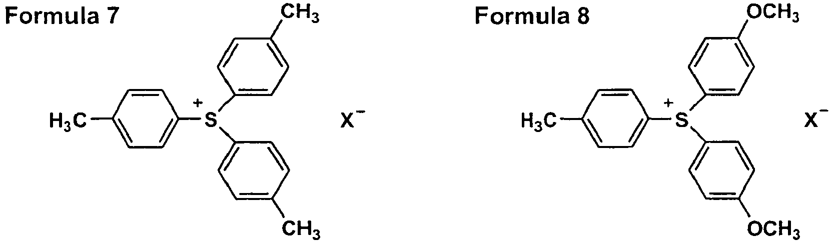

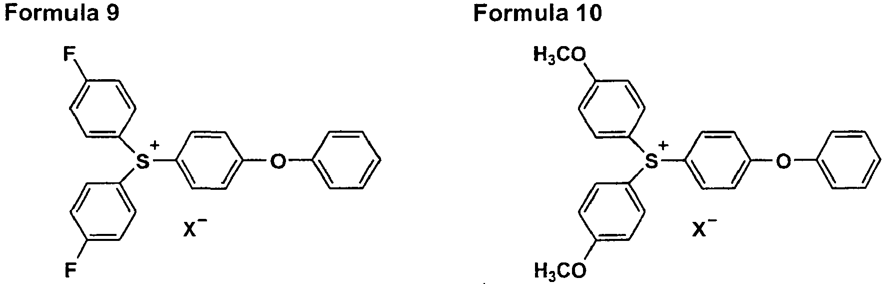

In the formula, X- is non-nucleophilic anionic residual group.

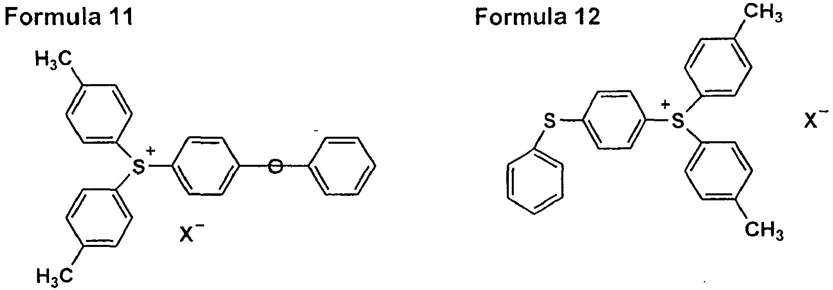

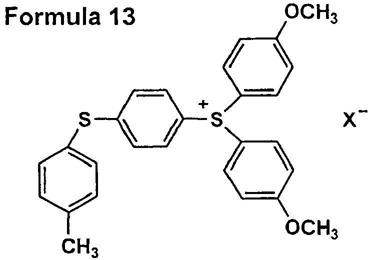

In the formula, X- is non-nucleophilic anionic residual group.

Exemplary compounds including iodonium salt include the following compounds in addition to aforesaid Formulas 5 - 13 wherein X is PF₆.

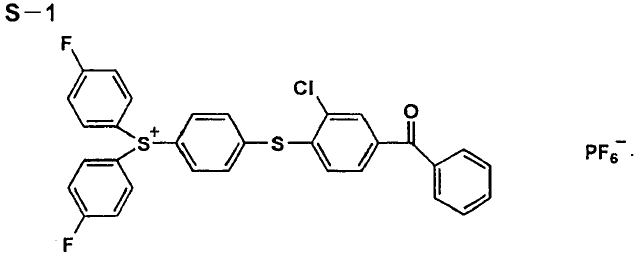

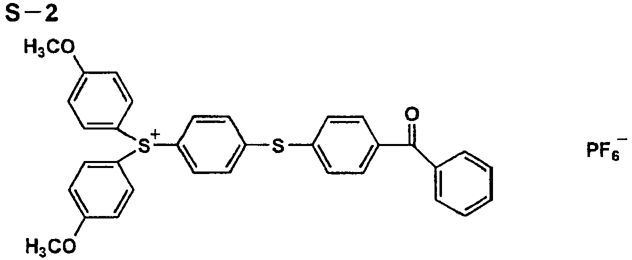

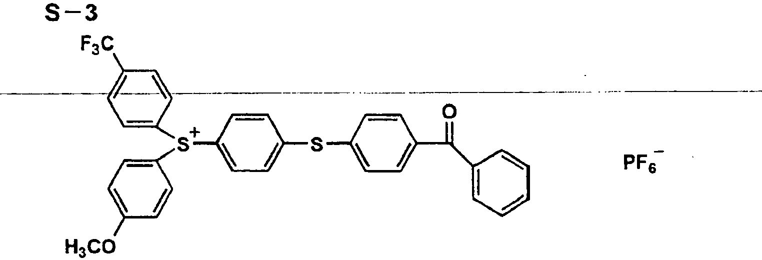

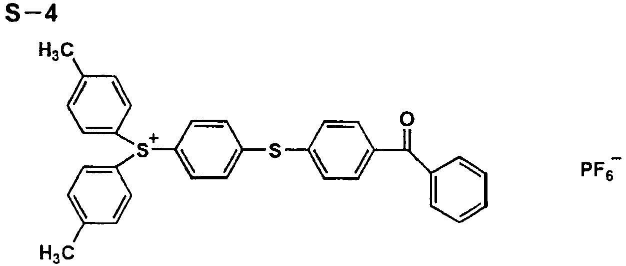

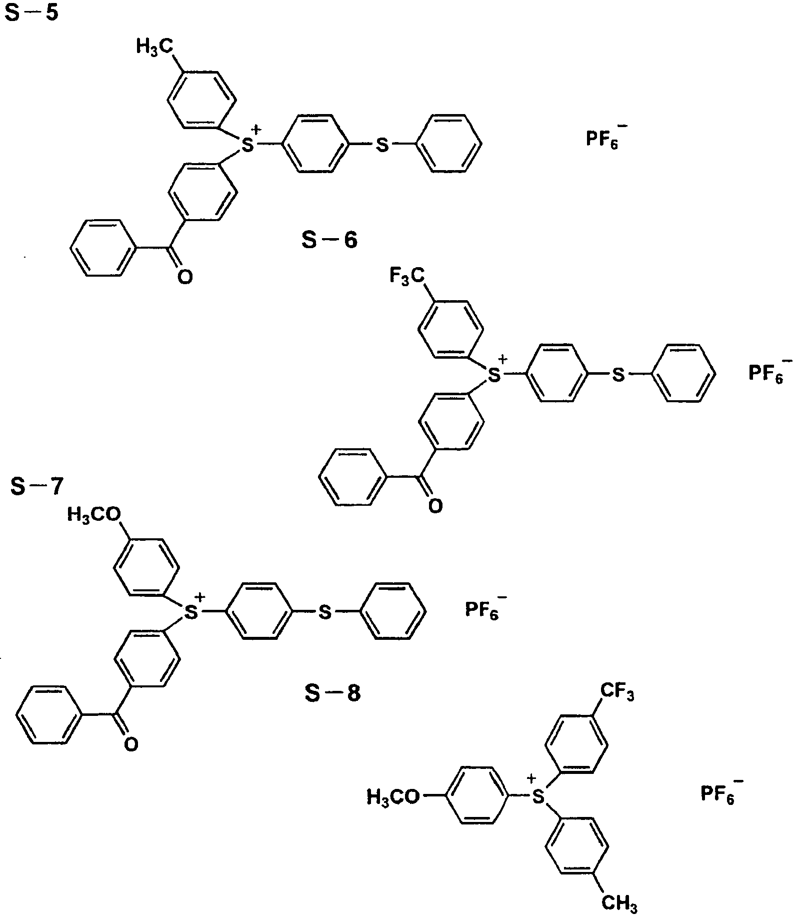

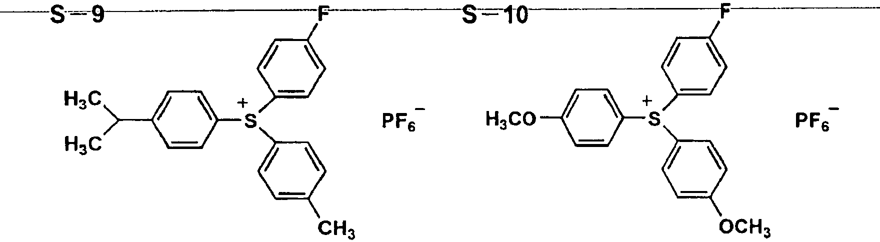

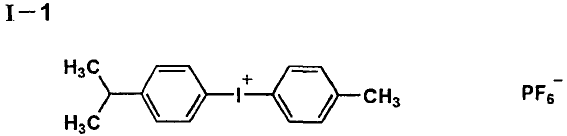

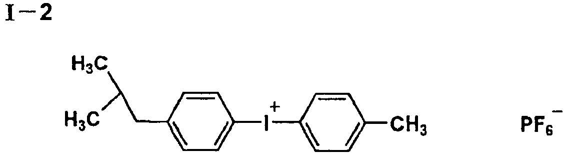

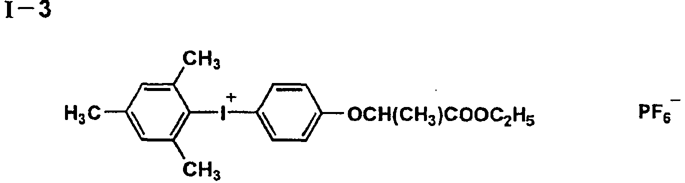

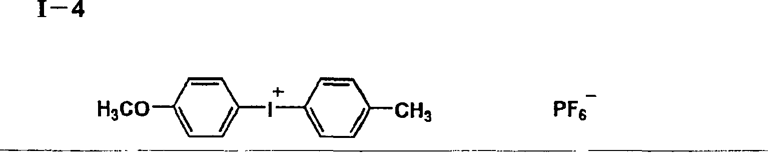

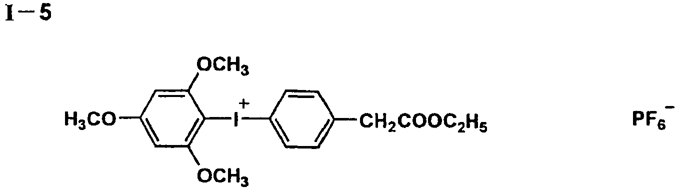

Particularly, in the invention according to Items (1)-(5) uncured ink quantity on a substrate at the time of ultraviolet irradiation is necessarily to be limited to the quantity to make ultraviolet transmittance at the absorption peak wavelength of a photo-polymerization initiator of not less than 0.1%. Since a photo-polymerization initiator is required to polymerize a polymerizing compound by absorbing ultraviolet rays, the upper limit of ultraviolet transmittance is less than 100%. An ultraviolet light source is required to be provided with spectrum at this absorption peak wavelength.

### (Colorant)

Since a colorant is a primary component of ultraviolet ray absorption in ultraviolet curable ink, used in the invention according to Items (1) - (5), the selection of said colorant is important to decrease ink application quantity while keeping a required image density. As a colorant of ultraviolet curable ink utilized in this invention, a colorant capable of being dissolved or dispersed in the primary component of a photo-polymerizable compound can be utilized, however, pigment is preferred with respect to a weather-proofing.

Actinic ray curable ink-jet ink of this invention contains pigment as a colorant. Preferably utilized pigment will be listed below.
C. I. Pigment Yellow-1, 3, 12, 13, 14, 17, 42, 74, 81, 83, 87, 93, 95, 109, 120, 128, 138, 139, 151, 166, 180, and 185
C. I. Pigment Orange-16, 36, and 38
C. I. Pigment Red-5, 22, 38, 48 : 1, 48 : 2, 48 : 4, 49 : 1, 53 : 1, 57 : 1, 63 : 1, 101, 122, 144, 146, 177, and 185
C. I. Pigment Violet-19, and 23
C. I. Pigment Blue-15 : 1, 15 : 3, 15 : 4, 18, 60, 27, and 29
C. I. Pigment Green-7, and 36
C. I. Pigment White-6, 18, and 21
C. I. Pigment Black-7

For the purpose of dispersion of the above pigment, such as a ball mill, a sand mill, an atliter, a roll mill, an agitator, a Henschel mixer, a colloidal mill, an ultrasonic homogenizer, a pearl mill, a wet jet mill and a paint shaker can be utilized. A dispersion medium is preferably a photo-polymerizable compound, and monomer having the lowest viscosity among them is more preferably selected with respect to dispersion adaptability.

For dispersion of pigment, it is preferable to make the particle size of pigment particles of 0.08 - 0.5 µm, and selection of pigment, a dispersant and a dispersion medium; dispersion condition, and filtration condition are appropriately set so as to make the maximum particle size of 0.3 - 10 µm and preferably of 0.3 - 3 µm. By this particle size control, clogging of a head nozzle is depressed and storage stability, transparency and curing sensitivity of ink can be maintained.

In actinic ray curable ink-jet ink used in this invention, the colorant concentration is preferably 1 - 10 weight% based on the total ink.

Each ink is prepared employing these pigment as a colorant, in the invention according to Items (1) - (5), particularly ink of R, G and B, which are secondary colors among ink of 7 colors, may utilize pigment having the color itself. Further, a dye component of R ink may be a combination of a dye component of Y ink and a dye component of M ink; a dye component of B ink may be a combination of a dye component of M ink and a dye component of C ink; and a dye component of G ink may be a combination of a dye component of C ink and a dye component of Y ink. As a pigment dispersant, a polymer dispersant is preferably utilized.

Further, as a pigment dispersant, those having a basic anchor portion are preferably utilized, and a polymer dispersant having a comb form structure is more preferably utilized.

A polymer dispersant includes Solsperse Series by Avecia Corp. Specific examples of an utilizable pigment dispersant in this invention include such as Solsperse 9000, 17000, 18000, 19000, 20000, 24000SC, 24000GR, 28000 and 32000, manufactured by Avecia Corp.; Ajisper PB821, and PB822, manufactured by Ajinomoto Fine Techno Co., Ltd.; PLAAD ED214, ED251, DISPARLON DA-325 and DA-234, manufactured by Kusumoto Chemicals Co., Ltd.; EFKA-5207, 5244, 6220 and 6225, manufactured by EFKA Corp. Further, in addition to a pigment dispersant, a pigment derivative (a synergist) may be incorporated; and specific examples of a pigment derivative include such as Solsperse 5000, 12000 and 22000, manufactured by Avecia Corp.; and EFKA-6746 and 6750, manufactured by EFKA Corp. These dispersants and dispersion aids are preferably incorporated at 1 - 50 weight parts against 100 weight parts of pigment. As a dispersion medium, a solvent or a polymerizing compound is utilized, however, ultraviolet curable ink utilized in this invention, since being reacted·cured immediately after ink deposition, is preferably contains no solvent. When a solvent remains in a cured image, there are caused problems of deterioration of solvent resistance and VOC of a remaining solvent. Therefore, not a solvent but a polymerizing compound, and among them, a polymerizing compound having the lowest viscosity is preferably selected as a dispersion medium, with respect to dispersion adaptability.

Photo-curable ink of this invention preferably incorporates an aliphatic cyclic ester compound of 4 - 10 member ring or a cyclic ether compound of not less than 5 member ring, to improve curing capability and adhesiveness with various substrates.

A cyclic ester compound is preferably an aliphatic cyclic ester compound of 4 - 10 member ring. Specifically, listed are such as ε-caprolactone-6-hydroxyhexanoic acid-1,6-lactone, β-propiolactone, β-butylolactone, α-methyl-β-butylolactone, γ-butylolactone, γ-valerolactone, δ-valerolactone, ε-caprolactone, γ-caprolactone, γ-heptanolactone, cumarine, tetronic acid, pyrone, phthalide, 3-methyl-1,4-dioxa-2,5-dione, p-dioxane, molpholinedione, and morpholinedione and molphline. Further, mixture of these compounds may be also utilized.

A cyclic ether compound is preferably a cyclic ether compound of not less than 5 member ring and more preferably a cyclic ether compound containing no carbonic ester structure. Specifically, listed are 1,3-dioxorane, tetrahydrofuran, 1,4-dioxane, 1,3,5-trioxane, crown ether (such as 12-crown-4), 1,2-dimethyltetrahydrofuran, 2-methyltetrahydrofuran, 2-methyldioxorane and 4-methyldioxorane.

The content of an aliphatic cyclic ester compound of 4 - 10 member ring and a cyclic ether compound of not less than 5 member ring is preferably 1 - 10 weight%.

In an actinic ray curable composition of this invention, various additives other than those described above can be utilized. For example, incorporated can be a surfactant, a leveling additive and a matting agent; polyester type resin, polyurethane type resin, vinyl type resin acrylic resin, rubber type resin and waxes to control film physical properties. Further, any basic compound well known in the art can be utilized to improve storage stability; however, typically listed are a basic alkali metal compound, a basic alkaline earth metal compound and basic organic compound such as amine. Further, hybrid of radical·cation type curing ink is also utilized.

A basic compound can be also incorporated. By incorporation of a basic compound, ejection stability is improved as well as generation of wrinkles due to curing shrinkage can be inhibited even under low humidity. Any basic compound well known in the art can be utilized, however, typically listed is such as a basic alkali metal compound, a basic alkaline earth metal compound and a basic organic compound such as amine.

The basic alkali metal compound described before includes hydroxide of alkali metal (such as lithium hydroxide, sodium hydroxide and potassium hydroxide), carbonate of alkali metal (such as lithium carbonate, sodium carbonate and potassium carbonate) and alcoholate of alkali metal (such as sodium methoxide, sodium ethoxide, potassium methoxide and potassium ethoxide). The aforesaid basic alkaline earth metal compound includes hydroxide of alkaline earth metal (such as magnesium hydroxide and calcium hydroxide), carbonate of alkaline earth metal (such as magnesium carbonate and calcium carbonate) and alcoholate of alkaline earth metal (such as magnesium methoxide).

A basic organic compound includes nitrogen containing heterocyclic compounds such as amine, quinoline and quinolidine, however, amine is preferred with respect to compatibility with photo-polymerizing monomer, which includes such as octylamine, naphthylamine, xylenediamine, benzylamine, diphenylamine, dibutylamine, dioctylamine, dimethylaniline, quinucridine, tributylamine, trioctylamine, tetramethylethylenediamine, tetramethyl-1,6-hexamethylenediamine, hexatetramine and triethanolamine.

The concentration of a basic compound incorporated is in a range of preferably 10 - 1,000 weight ppm and specifically preferably of 20 - 500 weight ppm, based on the total photo-polymerizing monomer. Herein, a basic compound may be utilized alone or in combination of plural types.

In actinic ray curable ink-jet ink of this invention, an actinic ray curable composition preferably has a viscosity at 25 °C of 7 - 40 mPa·s with respect to achieving stable ejection behavior and an excellent curing capability regardless of curing environment (such as temperature and humidity).

### (Substrate)

As a substrate utilized as a recording material in this invention, any of a wide range of synthetic resin utilized in various applications heretofore can be employed, and specifically listed are such as polyester, polyvinyl chloride, polyethylene, polyurethane, polypropylene, acrylic resin, polycarbonate, polystyrene, acrylonitrile-butadienestyrene copolymer, polyethylene terephthalate and polybutadiene terephthalate, and the thickness and form of these synthetic resin substrate are never limited.

As a substrate utilized in this invention, a non-absorptive support in addition to ordinary non-coated paper and coated paper, however, among them preferably utilized is a non-absorptive support as a substrate.

As a non-absorptive support, various types of plastic and film thereof can be utilized, and various plastic film includes such as PET film, OPS film, OPP film, ONy film, PVC film, PE film and TAC film. In addition to these, such as polycarbonate, acrylic resin, ABS, polyacetal, PVA and rubbers can be utilized. Further, metals and glasses are also applicable. Among these substrates, a constitution of this invention is effective in the case of forming an image on PET film, OPS film, OPP film, ONy film and PVC film, which are capable of shrinkage by heat. In these substrates, curl and deformation of film are easily caused by such as curing shrinkage of ink and heat at the time of a curing reaction, and ink film is difficult to follow shrinkage of a substrate.

The surface energy of these various types of plastic film significantly differs and there has been a problem heretofore that the dot diameter will change after deposition depending on a substrate. A constitution of this invention includes from OPP film and OPS film having a small surface energy till PET film having a relatively large surface energy, however, a substrate is preferably provided with a wet index of 40 - 60 mN/m, with respect to adhesiveness and bleeding.

In this invention, a long length (a web) recording material is advantageously utilized, with respect to a cost of a recording material such as packaging expense and a manufacturing cost, preparation efficiency of print and adaptability to various sizes of print.

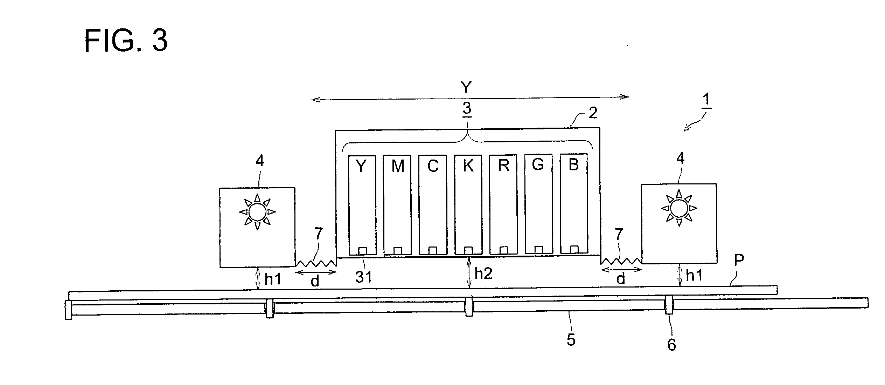

Next, an ink-jet recording device used in the invention described in Items (1) - (5) will be explained appropriately referring to the drawings (Figs. 3 - 5).

Herein, a recorder of the drawings is only an embodiment of a recorder used in the invention described in Items (1) - (5), and a recorder of this invention is not limited to these drawings.

Fig. 3 is a front view to show a constitution of the primary portion of a recorder used in the invention described in Items (1) - (5). Recorder 1 is constituted of such as head carriage 2, recording head 3, irradiation means 4 and platen portion 5. In this recorder 1, platen portion 5 is arranged under substrate P. Platen portion 5 is provided with a function to absorb ultraviolet rays and absorbs excess ultraviolet rays having passed through substrate P. As a result, an image having a high precision is stably reproduced.

Substrate (being a recording material) P is guided by guide member 6 to be transferred from this side to the interior of Fig. 3 by operation of a transfer means (not shown in the drawing). A head scanning means (not shown in the drawing) scans recording head 3 held by head carriage 2 by shifting head carriage 2 back and forth along the Y direction in Fig. 3.

Head carriage 2 is arranged over substrate P and stores a plural number of recording head 3 corresponding to the number of colors utilized for image printing on substrate P so as to arrange the ejection outlet downward. Head carriage 2 is arranged against a recorder 1 main body in a state of freely going and returning along Y direction in Fig. 3 and is shifted back and forth along Y direction in Fig.. 3 by operation of a head scanning means.

Herein, in Fig. 3, head carriage 2 is drawn so as to store recording head 3 of Y, M, C, K, R, G and B, however, in practical use, a number of colors of recording head 3 to be stored in head carriage 2 can be appropriately determined.

Recording head 3 ejects ultraviolet curable ink, which has been supplied from an ink supply means (not shown in the drawing) toward substrate P through an ejection outlet by operation of an ejection means (not shown in the drawing), a plural number of which are stored in the recording head. Ultraviolet curable ink ejected from recording head 3 is comprised of such as a colorant, a polymerizing compound and a photo-polymerization initiator, and provided with a capability of curing by cross-linking or a polymerization reaction of the polymerizing compound accompanied with catalytic action of the photo-polymerization initiator by receiving irradiation of ultraviolet rays.

Recording head 3 ejects ultraviolet curable ink as ink drops on a predetermined region (a region capable of being deposited) to land ink drops on said region capable of being deposited during a scan of being shifted from one end of substrate P to the other end of substrate P along the Y direction in Fig. 3 by drive of a head scanning means.

After the above-described scan is appropriately performed for several times to eject ultraviolet curable ink toward one portion of a region capable of being deposited, substrate P is appropriately transferred from this side to the interior direction in Fig. 3 by a transfer means, and ultraviolet curable ink is ejected toward the next region capable of being deposited adjacent to the above-described region capable of being deposited along the interior direction in Fig. 3 by recording head 3 while scanning by a head scan means is again performed.

By repeating the above operation and ejecting ultraviolet curable ink from recording head 3 synchronous with a head scan means and a transfer means, an image comprising aggregate of ultraviolet curable ink drops is formed on substrate P.

Irradiation means 4 is constituted of an ultraviolet lamp which emits ultraviolet rays of a specific wavelength region at stable exposure energy and a filter which transmits ultraviolet rays of a specific wavelength. Herein, as an ultraviolet lamp, such as a mercury lamp and a metal halide lamp, which are described before, are applicable, and a metal halide tube, a cold cathode tube and a mercury tube of a band form are preferable.

Irradiation means 4 is provided with a form same as the maximum one, which can be set by recorder (ultraviolet curable ink-jet printer) 1 among regions capable of being deposited on which ultraviolet curable ink is ejected by recording head 3 in one time of scan by drive of head scan means, or a form larger than a region capable of being deposited.

Irradiation means 4 is fixing arranged approximately parallel against substrate P on the both sides of head carriage 2.

As described before, as a means to adjust illuminance at the ink ejection portion, it is effective to light shield the whole recording head 3, or to adjust distance h1 between irradiation means 4 and substrate P, distance h2 between ink ejection portion 31 of recording head 3 and substrate 3, and distance d between recording head 3 and irradiation means 4. Further, bellows structure 7 between recording head and irradiation means 4 is also preferable.

Further, the wavelength of ultraviolet rays irradiated by irradiation means 4 can be appropriately varied by changing an ultraviolet lamp or a filter which is arranged in irradiation means 4.

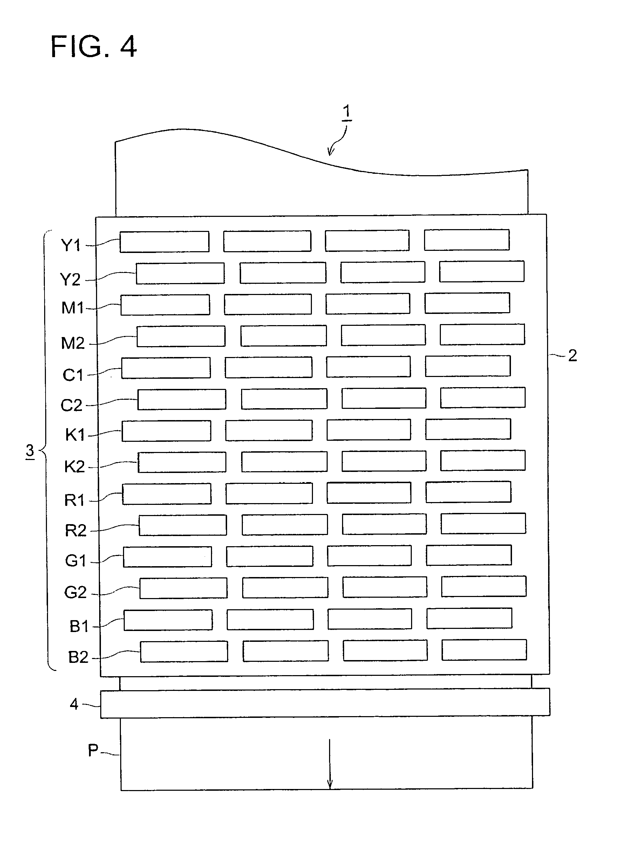

Fig. 4 is a drawing to show another example of a constitution of the primary portion of an ink-jet recording device.

An ink-jet recording device shown in Fig. 4 is called as a line head method, and a plural number of recording head 3 of each color are fixing arranged in head carriage 2 so as to cover the whole width of substrate P. Head carriage 2 is light shielded.

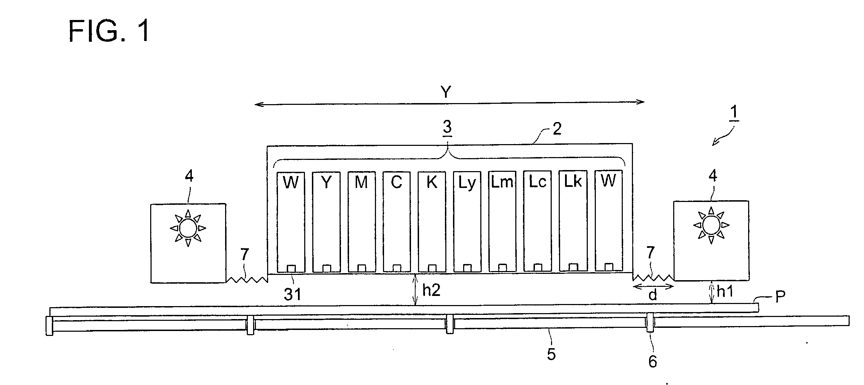

On the other hand, on the down stream of head carriage 2, irradiation means 4 is arranged similarly so as to cover the whole width of recording material P and to cover the whole ink printing region. As an ultraviolet lamp utilized for irradiation means 4, similar one to those described in Fig. 1 can be employed.

In this line head method, head carriage 2 and irradiation means 4 are fixed and only substrate P is transported and an image is formed by performing ink ejection and curing.

### EXAMPLES

In the following, this invention will be specifically explained referring to examples, however, is not limited thereto.

Example 1: an example corresponding to the invention described in Items (1) - (5)

### [Preparation of Ink]

The composition described in following Table 4 was mixed under heating (40 °C) while shielded from light, and filtered through a 1 µm filter to prepare ink Y, ink M, ink C, ink K, ink R, ink G and ink B.

The following numeral designations are used in the table.
101: Aronoxetane OXT^{®}-101 (being a mono-functional polymerizable compound, produced by Toa Gosei Co., Ltd.)
212: Aronoxetane OXT^{®}-212 (being a mono-functional polymerizable compound, produced by Toa Gosei Co., Ltd.)
221: Aronoxetane OXT^{®}-221 (being a bi-functional polymerizable compound, produced by Toa Gosei Co., Ltd.)
Compound 1: a bi-functional polymerizable compound
Compound 2: a photo-polymerization initiator
PY180: C. I. Pigment Yellow 180
PR122: C. I. Pigment Red 122
PB15: C. I. Pigment Blue 15:4
PG7: C. I. Pigment Green 7
PBk7: C. I. Pigment Black 7
PB822: Ajisper PB822 (being a dispersant, produced by Ajinomoto Finetechno Co., Ltd.)
TPA: tri-isopropanol amine (being a polymerization inhibitor)

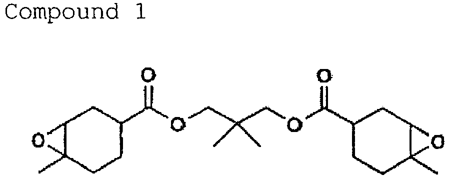

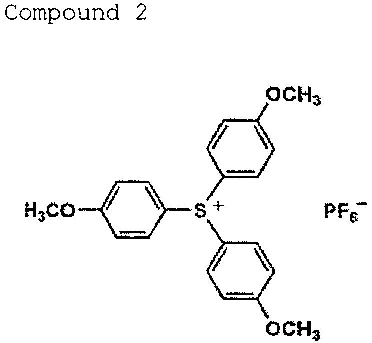

**Table 4**

| Ink | 212 | 101 | 221 | 5903 | 5937 | PY180 | PR122 | PB15:4 | PG7 | PBk7 | PB822 | TPA | Pure water |
|---|---|---|---|---|---|---|---|---|---|---|---|---|---|
| Y | 7.0 | 3.0 | 62.0 | 18.0 | 4.0 | 3.5 | | | | | 1.4 | 0.1 | 1.0 |
| M | 7.0 | 3.0 | 64.1 | 18.0 | 4.0 | | 2.0 | | | | 0.8 | 0.1 | 1.0 |
| C | 7.0 | 3.0 | 64.1 | 18.0 | 4.0 | | | 2.0 | | | 0.8 | 0.1 | 1.0 |
| K | 7.0 | 3.0 | 61.3 | 18.0 | 4.0 | | | | | 4.0 | 1.6 | 0.1 | 1.0 |
| R | 7.0 | 3.0 | 61.3 | 18.0 | 4.0 | | 4.0 | | | | 1.6 | 0.1 | 1.0 |
| G | 7.0 | 3.0 | 62.7 | 18.0 | 4.0 | | | | 3.0 | | 1.2 | 0.1 | 1.0 |
| B | 7.0 | 3.0 | 62.0 | 18.0 | 4.0 | | | 3.5 | | | 1.4 | 0.1 | 1.0 |

### [Ink-jet Recording Method I: One Time Exposure of All Colors·Line Recording]

The above described ink was loaded into an on-demand type ink-jet printer as shown in Fig. 4, being an ink-jet recording device, on which a piezo type ink-jet head for 7 colors, in which 2 sets of heads for each color having a nozzle pitch of 360 dpi were combined to obtain a line head of 720 dpi, was mounted. Further from color data (before conversion) of Y, M, C and K sent to a specific pixel based on image data separated into 4 colors of Y, M, C and K ink (after conversion) utilized for the pixel was determined based on conversion tables 1 and 2 described in following Tables 5 and 6, whereby solid images were formed at a resolution of 720 x 720 dpi and at liquid volume of 8 pl per pixel by use of 7 colors of ink, comprising Y, M, C, K, R, G and B. "dpi" means dots per inch, or per 2.54 cm. The ink, after having been deposited, was irradiated and cured by irradiation from a high pressure mercury lamp VZero085^{®} (manufactured by Integration Technology Corp.) within 1 second after ink deposition.

**Table 5**

| Color | Before conversion | | | | After conversion | | | | | | | Total output |
|---|---|---|---|---|---|---|---|---|---|---|---|---|
| | Y | M | C | K | Y | M | C | K | R | G | B | |
| 1 | 0 | 0 | 0 | 0 | 0 | 0 | 0 | 0 | 0 | 0 | 0 | 0 |
| 2 | 1 | 0 | 0 | 0 | 1 | 0 | 0 | 0 | 0 | 0 | 0 | 1 |
| 3 | 0 | 1 | 0 | 0 | 0 | 1 | 0 | 0 | 0 | 0 | 0 | 1 |
| 4 | 0 | 0 | 1 | 0 | 0 | 0 | 1 | 0 | 0 | 0 | 0 | 1 |
| 5 | 0 | 0 | 0 | 1 | 0 | 0 | 0 | 0.7 | 0 | 0 | 0 | 0.7 |
| 6 | 1 | 1 | 0 | 0 | 0 | 0 | 0 | 0 | 1 | 0 | 0 | 1 |
| 7 | 1 | 0 | 1 | 0 | 0 | 0 | 0 | 0 | 0 | 1 | 0 | 1 |
| 8 | 1 | 0 | 0 | 1 | 0.7 | 0 | 0 | 0.3 | 0 | 0 | 0 | 1 |
| 9 | 0 | 1 | 1 | 0 | 0 | 0 | 0 | 0 | 0 | 0 | 1 | 1 |
| 10 | 0 | 1 | 0 | 1 | 0 | 0.7 | 0 | 0.3 | 0 | 0 | 0 | 1 |
| 11 | 0 | 0 | 1 | 1 | 0 | 0 | 0.7 | 0.3 | 0 | 0 | 0 | 1 |
| 12 | 1 | 1 | 1 | 0 | 0 | 0 | 0 | 0.7 | 0 | 0 | 0 | 0.7 |
| 13 | 1 | 1 | 0 | 1 | 0 | 0 | 0 | 0.3 | 0.7 | 0 | 0 | 1 |
| 14 | 1 | 0 | 1 | 1 | 0 | 0 | 0 | 0.3 | 0 | 0.7 | 0 | 1 |
| 15 | 0 | 1 | 1 | 1 | 0 | 0 | 0 | 0.3 | 0 | 0 | 0.7 | 1 |
| 16 | 1 | 1 | 1 | 1 | 0 | 0 | 0 | 1 | 0 | 0 | 0 | 1 |

| | | | | | | | | | | | | |
|---|---|---|---|---|---|---|---|---|---|---|---|---|
| 0: non-record, 1: record | | | | | | | | | | | | |

**Table 6**

| Color | Before conversion | | | | After conversion | | | | | | | Total output |
|---|---|---|---|---|---|---|---|---|---|---|---|---|
| | Y | M | C | K | Y | M | C | K | R | G | B | |
| 1 | 0 | 0 | 0 | 0 | 0 | 0 | 0 | 0 | 0 | 0 | 0 | 0 |
| 2 | 1 | 0 | 0 | 0 | 1 | 0 | 0 | 0 | 0 | 0 | 0 | 1 |
| 3 | 0 | 1 | 0 | 0 | 0 | 1 | 0 | 0 | 0 | 0 | 0 | 1 |
| 4 | 0 | 0 | 1 | 0 | 0 | 0 | 1 | 0 | 0 | 0 | 0 | 1 |
| 5 | 0 | 0 | 0 | 1 | 0 | 0 | 0 | 1 | 0 | 0 | 0 | 1 |
| 6 | 1 | 1 | 0 | 0 | 1 | 1 | 0 | 0 | 0 | 0 | 0 | 2 |
| 7 | 1 | 0 | 1 | 0 | 1 | 0 | 1 | 0 | 0 | 0 | 0 | 2 |
| 8 | 1 | 0 | 0 | 1 | 1 | 0 | 0 | 1 | 0 | 0 | 0 | 2 |
| 9 | 0 | 1 | 1 | 0 | 0 | 1 | 1 | 0 | 0 | 0 | 0 | 2 |
| 10 | 0 | 1 | 0 | 1 | 0 | 1 | 0 | 1 | 0 | 0 | 0 | 2 |
| 11 | 0 | 0 | 1 | 1 | 0 | 0 | 1 | 1 | 0 | 0 | 0 | 2 |
| 12 | 1 | 1 | 1 | 0 | 0.3 | 0.3 | 0.3 | 1 | 0 | 0 | 0 | 1.9 |
| 13 | 1 | 1 | 0 | 1 | 1 | 1 | 0 | 0.5 | 0 | 0 | 0 | 2.5 |
| 14 | 1 | 0 | 1 | 1 | 1 | 0 | 1 | 0.5 | 0 | 0 | 0 | 2.5 |
| 15 | 0 | 1 | 1 | 1 | 0 | 1 | 1 | 0.5 | 0 | 0 | 0 | 2.5 |
| 16 | 1 | 1 | 1 | 1 | 0.5 | 0.5 | 0.5 | 1 | 0 | 0 | 0 | 2.5 |

| | | | | | | | | | | | | |
|---|---|---|---|---|---|---|---|---|---|---|---|---|
| 0: non-record, 1: record | | | | | | | | | | | | |

### [Ink-jet Recording Method 2: Two-fraction Exposure·Line Recording]

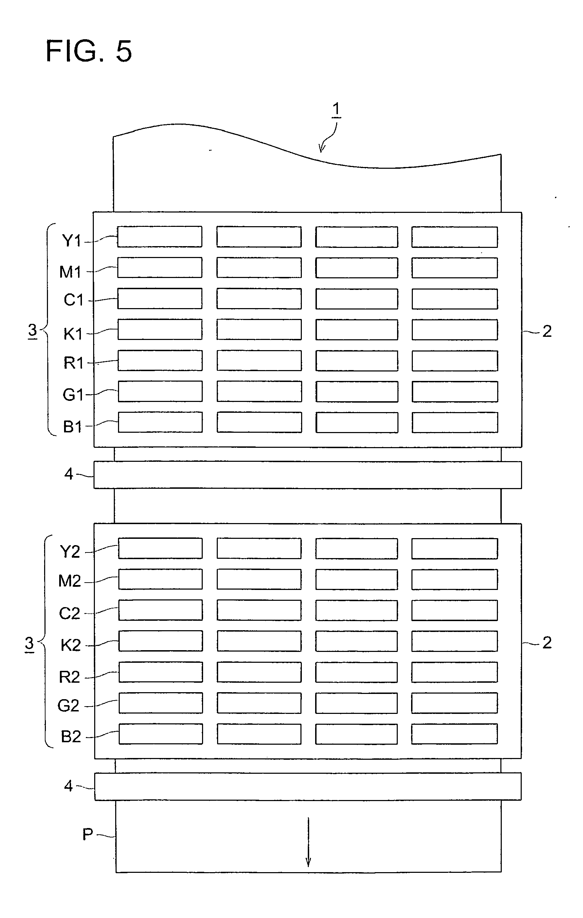

The above described ink was loaded in an on-demand type ink-jet printer, shown in Fig. 5, serving as an ink-jet recording device, on which a piezo type 7 color ink-jet head, in which a head unit for all colors having a nozzle pitch of 360 dpi and a light source were arranged, and further another head unit for all colors and another light source were arranged while being shifted by 360 dpi along scan direction from the aforesaid head unit and light source to make a line head equivalent to 720 dpi, was mounted, and from color data (before conversion) of Y, M, C and K sent to a certain pixel based on image data separated into the 4 colors of Y, M, C, and K ink (after conversion) utilized for the pixel was determined according to conversion tables 1 and 2 described in above Tables 8 and 9, whereby solid images were formed at a resolution of 720 x 720 dpi and at liquid volume of 8 pl per pixel using 7 color ink comprising Y, M, C, K, R, G and B. The ink, within 1 second after ink deposition, was irradiated and cured by irradiation from a high pressure mercury lamp VZero085 (manufactured by Integration Technology Corp.).

### [Ink-jet Recording Method 3: Two-fraction Exposure·2 Pass Serial Recording]

The above described ink was loaded in an on-demand type ink-jet printer serving as an ink-jet recording device as shown in Fig. 3, on which a 7-color piezo type ink-jet head was mounted, which was provided with a head of nozzle pitch of 360 dpi, light sources being arranged on both sides of the head, and has a resolution corresponding to 720 dpi based on 2 reciprocating passes, and from color data (before conversion) of Y, M, C, and K sent to any specific pixel based on image data separated into the 4 colors of Y, M, C, and K ink (after conversion) utilized for the pixel was determined using conversion tables 1 and 2 described in above Tables 8 and 9, whereby solid images were formed at a resolution of 720 x 720 dpi and at liquid volume of 8 pl per pixel using 7 color ink comprising Y, M, C, K, R, G and B. "dpi" means dots per inch, or per 2.54 cm. The ink, 1 second after ink deposition, cured by irradiation from a high pressure mercury lamp, such as VZero085® (manufactured by Integration Technology Corp.).

### [Measurement and Evaluation]

### (Ultraviolet Transmittance)

Solid images were formed by above-described ink-jet recording methods 1 - 3 (herein, cured via high pressure mercury lamp VZero085® was not employed) by utilizing a polypropylene substrate, and ultraviolet transmittance per pixel at an absorption peak wavelength (280 nm) of a photo-polymerization initiator was measured with a spectrophotometer having an aperture of 10 mmφ. The obtained results are shown in Table 17.

**Table 7**

| Color | Conversion Table 1 | | | Conversion Table 2 | | |
|---|---|---|---|---|---|---|
| | Total output | Ultraviolet transmittance (%) | | Total output | Ultraviolet transmittance (%) | |
| | | Recording method 1 | Recording methods 2 and 3 | | Recording method 1 | Recording methods 2 and 3 |
| 1 | 0 | 100 | 100 | 0 | 100 | 100 |
| 2 | 1 | 0.6 | 7.8 | 1 | 0.6 | 7.8 |
| 3 | 1 | 0.3 | 5.7 | 1 | 0.3 | 5.7 |
| 4 | 1 | 1.2 | 11.0 | 1 | 1.2 | 11.0 |
| 5 | 0.7 | 0.8 | 9.0 | 1 | 0.1 | 3.2 |
| 6 | 1 | 0.1 | 3.5 | 2 | <0.01 | 0.4 |
| 7 | 1 | 0.3 | 5.6 | 2 | <0.01 | 0.9 |
| 8 | 1 | 0.4 | 5.9 | 2 | <0.01 | 0.3 |
| 9 | 1 | 0.7 | 8.1 | 2 | <0.01 | 0.6 |
| 10 | 1 | 0.2 | 4.8 | 2 | <0.01 | 0.2 |
| 11 | 1 | 0.6 | 7.6 | 2 | <0.01 | 0.4 |
| 12 | 0.7 | 0.8 | 9.0 | 1.9 | <0.01 | 0.3 |
| 13 | 1 | 0.1 | 3.4 | 2.5 | <0.01 | 0.1 |
| 14 | 1 | 0.2 | 4.7 | 2.5 | <0.01 | 0.2 |
| 15 | 1 | 0.4 | 6.1 | 2.5 | <0.01 | 0.1 |
| 16 | 1 | 0.1 | 3.2 | 2.5 | <0.01 | 0.3 |

### [Evaluation]

Images were formed by above-described ink-jet recording methods 1 - 3 utilizing synthetic paper (UPO FGS®, synthetic paper produced by UPO Corp.) as a substrate, and evaluation of the following was performed.

### <Curing Wrinkles>

The solid image portions were visually observed and evaluated based on the following criteria.
A: No observed decrease of gloss due to curing wrinkles in the solid image portions.
B: A slight observed decrease of gloss due to curing wrinkles in the solid image portions.
C: A definite observed decrease of gloss due to curing wrinkles in the solid image portions.

### <Adhesion>

Cellotape (being a registered trade mark) of a width of 25 mm, after having been firmly adhered onto the surface of solid image portions, was quickly peeled off at an angle of 90 ° to test for peel-off resistance based on the following criteria.
A: No peel-off of any image portion was observed.
C: Some peel-off of image portions was observed.

### <Surface texture>

The surface of a solid image portion was observed, visually and by touch, to be ranked based on the following criteria.
A: Roughened surface is barely noted by visual and tactile evaluation.
B: Slight roughness of the surface was noted by tactile evaluation, not however by visual observation, resulting in practical use.
C: Granularity of the surface was obvious by visual and tactile evaluation, resulting in non-viability for practical use.

The results of these evaluations are shown in Tables 8 and 9.

**Table 8**

| Color | Conversion table | Recording method 1 | | | Recording method 2 | | | Recording method 3 | | |
|---|---|---|---|---|---|---|---|---|---|---|
| | | Curing wrinkles | Adhesion | Surface texture | Curing wrinkles | Adhesion | Surface texture | Curing wrinkles | Adhesion | Surface texture |
| 1 | 1 | - | - | - | - | - | - | - | - | - |
| 2 | 1 | A | A | A | A | A | A | A | A | A |
| 3 | 1 | A | A | A | A | A | A | A | A | A |
| 4 | 1 | A | A | A | A | A | A | A | A | A |
| 5 | 1 | A | A | A | A | A | A | A | A | A |
| 6 | 1 | B | A | A | A | A | A | A | A | A |
| 7 | 1 | A | A | A | A | A | A | A | A | A |
| 8 | 1 | A | A | A | A | A | A | A | A | A |
| 9 | 1 | A | A | A | A | A | A | A | A | A |
| 10 | 1 | A | A | A | A | A | A | A | A | A |
| 11 | 1 | A | A | A | A | A | A | A | A | A |
| 12 | 1 | A | A | A | A | A | A | A | A | A |
| 13 | 1 | B | A | A | A | A | A | A | A | A |
| 14 | 1 | A | A | A | A | A | A | A | A | A |
| 15 | 1 | A | A | A | A | A | A | A | A | A |
| 16 | 1 | B | A | A | A | A | A | A | A | A |

**Table 9**

| Color | Conversion table | Recording method 1 | | | Recording method 2 | | | Recording method 3 | | |
|---|---|---|---|---|---|---|---|---|---|---|
| | | Curing wrinkles | Adhesion | Surface texture | Curing wrinkles | Adhesion | Surface texture | Curing wrinkles | Adhesion | Surface texture |
| 1 | 2 | - | - | - | - | - | - | - | - | - |
| 2 | 2 | A | A | A | A | A | A | A | A | A |
| 3 | 2 | A | A | A | A | A | A | A | A | A |
| 4 | 2 | A | A | A | A | A | A | A | A | A |
| 5 | 2 | B | A | A | A | A | A | A | A | A |
| 6 | 2 | C | B | B | B | A | B | A | A | B |
| 7 | 2 | C | B | B | A | A | B | A | A | B |
| 8 | 2 | C | B | B | A | A | B | A | A | B |
| 9 | 2 | C | B | B | A | A | B | A | A | B |
| 10 | 2 | C | B | B | A | A | B | A | A | B |
| 11 | 2 | C | B | B | A | A | B | A | A | B |
| 12 | 2 | C | B | B | A | A | B | A | A | B |
| 13 | 2 | C | C | C | B | A | C | A | A | C |
| 14 | 2 | C | C | C | A | A | C | A | A | C |
| 15 | 2 | C | C | C | B | A | C | A | A | C |
| 16 | 2 | C | C | C | A | A | C | A | A | C |

It can be proven from Tables 8 and 9 that image samples prepared by the ink-jet recording method of this invention are superior in lack of curing wrinkles, good adhesion and smooth texture than the comparative examples of other ink-jet recording methods.

## Claims

1. An ink-jet recording method comprising the steps of:
(a) ejecting plural colors of inks onto a substrate,
and
(b) irradiating ultraviolet rays onto the deposited ink to cure and fix the ink to form an image,
wherein uncured ink quantity on the substrate at the time of ultraviolet ray irradiation is limited by i) interfacing an image, ii) limiting ink quantity by increasing a content rate of a colorant, or iii) utilizing a conversion table, a pixel in which Y and M are accumulated is replace by R, a pixel in which M and C are accumulated is replaced by B, a pixel in which C and Y are accumulated is replaced by G, and a pixel in which Y, M and C are accumulated is replaced by K, so as to result in ultraviolet transmittance of at least 0.1 % at the absorption peak wavelength of a photo-polymerization initiator contained in the ink.

2. The ink-jet recording method described in claim 1,
wherein the inks of seven colors comprising yellow, magenta, cyan, black, blue, green and red are utilized as the plural color inks.

3. An ink set comprising plural color Inks utilized in the ink-jet recording method described in claim 1 or 2,
wherein ultraviolet transmittance of a solid image with respect to each ink of all the plural colors is not less than 0.1 %.

4. The ink set described in claim 3,
wherein the seven color inks of a yellow, magenta, cyan, black, blue, green and red ink are utilized as the plural color inks.

## Patentansprüche

1. Ein Tintenstrahlaufzeichnungsverfahren, umfassend die Schritte
(a)Ausstoßen von verschiedenfarbigen Tinten auf ein Substrat, und
(b) Bestrahlen der aufgebrachten Tinte mit ultravioletten Strahlen, um die Tinte zur Erzeugung eines Bildes zu härten und zu fixieren,
worin zum Zeitpunkt der Bestrahlung mit ultravioletten Strahlen die Menge an ungehärteter Tinte auf dem Substrat durch i) Interlacing eines Bildes, ii) Begrenzung der Tintenmenge durch Erhöhung des Gehaltsanteils eines Farbstoffes oder iii) Verwenden einer Umrechnungstabelle, ein Pixel, in dem Y und M akkumuliert sind, durch R ersetzt wird, ein Pixel, in dem M und C akkumuliert sind, durch B ersetzt wird, ein Pixel, in dem C und Y akkumuliert sind, durch G ersetzt wird und ein Pixel, in dem Y, M und C akkumuliert sind, durch K ersetzt wird, begrenzt wird, so dass eine Ultraviolettdurchlässigkeit von mindestens 0,1 % bei der Weilenlänge des Absorptionspeaks des Photopolymerisationsinitiators, der in der Tinten enthalten ist, resultiert.

2. Das Tintenstrahlaufzeichnungsverfahren nach Anspruch 1,
worin Tinten sieben verschiedener Farben, umfassend Geib, Magenta, Cyan, Schwarz, Blau, Grün und Rot, als verschiedenfarbige Tinten eingesetzt werden.

3. Ein Tintensatz umfassend verschiedenfarbige Tinten, weicher im Tintenstrahlaufzeichnungsverfahren nach Anspruch 1 oder 2 benutzt wird,
worin die Ultraviolettdurchlässigkeit eines festen Bildes nicht weniger als 0,1 % beträgt, bezogen auf jede Tinte aller verschiedenen Farben.

4. Der Tintensatz nach Anspruch 3,
worin die sieben Farbtinten einer gelben, mcgentoforbenen, cyanfarbenen, schwarzen, blauen, grünen und roten Tinten als verschiedenfarbige Tinten eingesetzt werden.

## Revendications

1. Procédé d'enregistrement à jet d'encre comprenant les étapes :
(a) l'éjection des plusieurs couleurs des encres sur un substrat et
(b) l'irradiation des rayons ultraviolets sur l'encre déposée pour durcir et fixer l'encre pour former une image,
dans lequel la quantité de l'encre non durcie sur le substrat au moment de l'irradiation des rayons ultravlolets est limitée par i) l'entrelacement d'une image, ii) la limitation de la quantité de l'encre par l'augmentation du taux de la teneur d'un colorant ou iii) l'utilisation d'une table de conversion, un pixel, dans lequel Y et M sont accumulés, est remplacé par R, un pixel, dans lequel M et C sont accumulés, est remplacé par B, un pixel, dans lequel C et Y sont accumulés, est remplacé par G et un pixel, dans lequel Y, M et C sont accumulés, est remplacé par K, pour ainsi résulter dans une transmission ultraviolette d'au moins 0,1 % au longueur d'onde de pic d'absorption de l'initiateur de photopolymérisation contenu dans l'encre.

2. Procédé d'enregistrement à jet d'encre selon la revendication 1, dans lequel les encres en sept couleurs comprenant du jaune, du magenta, du cyan, du noir, du bleu, du vert et du rouge sont utilisées comme des encres des plusieurs couleurs.

3. Ensemble d'encre comprenant des encres des plusieurs couleurs utilisée dans le procédé d'enregistrement à jet d'encres selon l'une des revendications 1 ou 2,
dans lequel la transmission ultraviolette de l'image solide par rapport à chaque encre des plusieurs couleurs n'est pas inférieure à 0,1 %.

4. Ensemble d'encre selon la revendication 3,
dans lequel les encres en sept couleurs comprenant du jaune, du magenta, du cyan, du noir, du bleu, du vert et du rouge sont utilisées comme des encres des plusieurs couleurs.
